# EUROPEAN PATENT APPLICATION

(11) **EP 4 589 690 A1**
(43) Date of publication of application: **23.07.2025**
(21) Application number: 23865289.5
(22) Date of filing: 30.08.2023
(51) Int. Cl.: H01M 4/525, C01G 53/00, H01M 4/131, H01M 4/36, H01M 4/62, H01M 50/107, H01M 50/538

(54) **NON-AQUEOUS ELECTROLYTE SECONDARY BATTERY**

(30) Priority: 12.09.2022 JP 2022144840
(71) Applicant: Panasonic Intellectual Property Management Co., Ltd., Kadoma-shi, Osaka 571-0057 (JP)
(72) Inventor: INOUE, Katsuya, Kadoma-shi, Osaka 571-0057 (JP); AOKI, Yoshinori, Kadoma-shi, Osaka 571-0057 (JP); JITO, Daizo, Kadoma-shi, Osaka 571-0057 (JP); OGASAWARA, Takeshi, Kadoma-shi, Osaka 571-0057 (JP); FUJITANI, Naoya, Kadoma-shi, Osaka 571-0057 (JP)
(74) Representative: Novagraaf International SA
(86) International application number: PCT/JP2023/031497
(87) International publication number: WO 2024/057933

(57) **Abstract**

A non-aqueous electrolyte secondary battery (10) comprises an electrode body (14) in which a positive electrode (11) and a negative electrode (12) are laminated with a separator interposed therebetween and an exterior body (15) accommodating the electrode body (14), and has a volumetric energy density of 600 Wh/L or more. The positive electrode (11) includes: a positive electrode core body; and a positive electrode mixture layer formed on the surface of the positive electrode core body and containing a positive electrode active material. The positive electrode active material contains: a lithium-containing composite oxide having a layered rock-salt structure; and a surface modification layer that is present on particle surfaces of the composite oxide. The surface modification layer contains: at least one element of Ca and Sr; and at least one element selected from the group consisting of W, Mo, Ti, Si, Nb, and Zr. The positive electrode mixture layer has a base weight amount of 250 g/m2 or more. At least three positive electrode leads (19) are connected to the positive electrode (11).

## Description

### TECHNICAL FIELD

The present disclosure relates to a non-aqueous electrolyte secondary battery.

### BACKGROUND ART

In recent years, non-aqueous electrolyte secondary batteries are widely used as high-power, high-capacity secondary batteries which comprise a positive electrode, a negative electrode, and a non-aqueous electrolyte and which charge and discharge by transferring Li ions or the like between the positive electrode and the negative electrode. Patent Literature 1 discloses a secondary battery of which output characteristics are improved by arranging current-collecting members above and below an electrode assembly from which a plurality of tabs protrude.

### CITATION LIST

### PATENT LITERATURE

PATENT LITERATURE 1: Japanese Patent No. 5747082

### SUMMARY

In recent years, larger batteries have been considered for the purpose of improving volumetric energy density. Improving output characteristics and cycle characteristics while maintaining high volumetric energy density in larger batteries is an important issue. Conventional art including Patent Literature 1 is unable to adequately address such issues and there is still much room for improvement.

A non-aqueous electrolyte secondary battery according to an aspect of the present disclosure comprises: an electrode assembly in which a positive electrode and a negative electrode are stacked via a separator; and an outer housing body that accommodates the electrode assembly, the non-aqueous electrolyte secondary battery having a volumetric energy density greater than or equal to 600 Wh/L, wherein the positive electrode includes a positive electrode core and a positive electrode mixture layer which is formed on a surface of the positive electrode core and which contains a positive electrode active material, the positive electrode active material includes a lithium-containing composite oxide having a layered rock salt structure and a surface-modified layer present on surfaces of particles of the composite oxide, the surface-modified layer includes at least one element of Ca and Sr and at least one element selected from the group consisting of W, Mo, Ti, Si, Nb, and Zr, a basis weight of the positive electrode mixture layer is greater than or equal to 250 g/m², and three or more positive electrode leads are connected to the positive electrode.

In addition, a non-aqueous electrolyte secondary battery according to another aspect of the present disclosure comprises: an electrode assembly in which a positive electrode and a negative electrode are stacked via a separator; and an outer housing body that accommodates the electrode assembly, the non-aqueous electrolyte secondary battery having a volumetric energy density greater than or equal to 600 Wh/L, wherein the positive electrode includes a positive electrode core and a positive electrode mixture layer which is formed on a surface of the positive electrode core and which contains a positive electrode active material, the positive electrode active material includes a lithium-containing composite oxide having a layered rock salt structure and a surface-modified layer present on surfaces of particles of the composite oxide, the surface-modified layer includes at least one element of Ca and Sr and at least one element selected from the group consisting of W, Mo, Ti, Si, Nb, and Zr, a basis weight of the positive electrode mixture layer is greater than or equal to 250 g/m², and in the electrode assembly, the positive electrode protruding above the negative electrode and the separator is connected to a positive electrode current-collecting member and a positive electrode lead is led out from the positive electrode current-collecting member.

According to the non-aqueous electrolyte secondary battery that is an aspect of the present disclosure, high energy density can be achieved and output characteristics and cycle characteristics can be improved.

### BRIEF DESCRIPTION OF DRAWINGS

FIG. 1 is a longitudinal sectional view of a non-aqueous electrolyte secondary battery that is an example of an embodiment.
FIG. 2 is a front view showing, in an expanded state, a positive electrode and a negative electrode that constitute an electrode assembly provided in the non-aqueous electrolyte secondary battery shown in FIG. 1.
FIG. 3 is a plan view showing positions where positive electrode leads are arranged on an upper surface of the electrode assembly.
FIG. 4 is a longitudinal sectional view of a non-aqueous electrolyte secondary battery that is another example of the embodiment.
FIG. 5 is a perspective view of an electrode assembly provided in the non-aqueous electrolyte secondary battery shown in FIG. 4, the perspective view being a diagram showing configurations of a positive electrode, a negative electrode, and a separator in a state where a vicinity of an outer end portion of a winding has been expanded.

### DESCRIPTION OF EMBODIMENTS

In recent years, larger battery sizes have been considered for the purpose of improving volumetric energy density. Increasing the size of a battery enables volumes of a positive electrode and a negative electrode to be increased relative to a volume of a portion of the battery that does not contribute to charge and discharge as compared to a conventional small battery. In other words, a percentage of the battery occupied by the positive electrode and the negative electrode can be increased.

However, if the battery size is excessively increased, a bias of reactions in electrode plates of the positive electrode and the negative electrode will occur. Specifically, charge-discharge reactions tend to be promoted in a vicinity of a position where a positive electrode lead is connected while charge-discharge reactions tend to occur less frequently at a distance from the position where the positive electrode lead is connected. Accordingly, a reduction in effective reaction areas of the positive electrode and the negative electrode increases internal resistance of the battery, resulting in a drop in output characteristics. In addition, since charge-discharge reactions are promoted in a vicinity of a position where the positive electrode lead is connected, cycle characteristics also tend to drop. The phenomenon described above is noticeable in batteries with a volumetric energy density greater than or equal to 600 Wh/L.

After diligent consideration in order to solve this problem, the inventors have found that using a lithium-containing composite oxide with a surface-modified layer containing at least one element of Ca and Sr and at least one element selected from the group consisting of W, Mo, Ti, Si, Nb, and Zr on surfaces of particles as a positive electrode active material improves cycle characteristics. It is presumed that the surface-modified layer effectively suppresses erosion and degradation of the lithium-containing composite oxide due to side reactions with a non-aqueous electrolyte, resulting in improved cycle characteristics.

Further diligent consideration by the inventors led to a discovery that setting a basis weight of the positive electrode mixture layer including the positive electrode active material described above to greater than or equal to 250 g/m² and setting a connection between the positive electrode and a sealing assembly to a predetermined mode improves output characteristics while maintaining the volumetric energy density and cycle characteristics. Setting the connection between the positive electrode and the sealing assembly to the predetermined mode makes a distribution of reactions in the positive electrode plate more uniform and increases the effective reaction area of the positive electrode. Accordingly, it is presumed that internal resistance of the battery decreases and output characteristics improve. In addition, using a lithium-containing composite oxide with a surface-modified layer as the positive electrode active material promotes the transfer of Li between the positive electrode active material and the electrolyte and reduces reaction resistance in the positive electrode. Accordingly, it is presumed that internal resistance of the battery decreases and output characteristics further improve. Therefore, by setting a basis weight of the positive electrode mixture layer including the positive electrode active material described above to greater than or equal to 250 g/m² and setting a connection between the positive electrode and the sealing assembly to a predetermined mode in a battery with a volumetric energy density greater than or equal to 600 Wh/L, high energy density can be achieved and, at the same time, output characteristics and cycle characteristics can be improved.

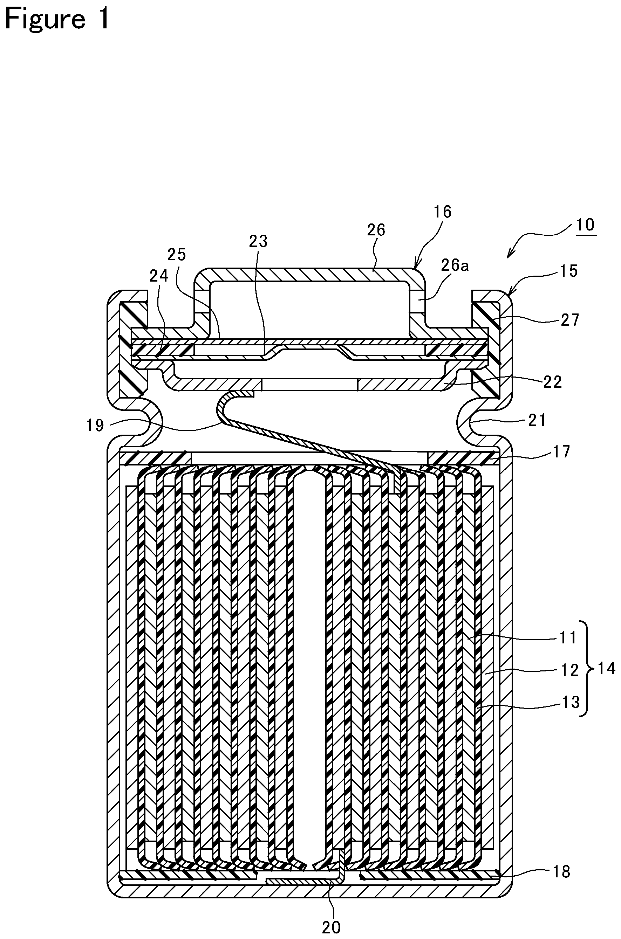

Hereinafter, an example of an embodiment of a non-aqueous electrolyte secondary battery according to the present disclosure will be described in detail with reference to FIGS. 1 to 3. In the following description, while a non-aqueous electrolyte secondary battery in which a wound electrode assembly is accommodated in an outer housing body with a bottomed cylindrical shape will be exemplified as an example of an embodiment of the non-aqueous electrolyte secondary battery according to the present disclosure, alternatively, the battery may be a rectangular battery comprising a square outer housing body with a bottomed cylindrical shape. In addition, when the term "approximately" is used in the present specification, it is used with the same meaning as the term "more or less" and a requirement expressed by "approximately ..." is satisfied when substantially the same. Note that configurations created by selectively combining respective constituent elements of the plurality of embodiments and modifications described below are included in the scope of the present disclosure.

FIG. 1 is a sectional view of a non-aqueous electrolyte secondary battery 10 that is an example of an embodiment. As shown in FIG. 1, the non-aqueous electrolyte secondary battery 10 comprises a wound electrode assembly 14, a non-aqueous electrolyte, and an outer housing body 15 that accommodates the electrode assembly 14 and the non-aqueous electrolyte. The electrode assembly 14 includes a positive electrode 11, a negative electrode 12, and a separator 13 and has a wound structure in which the positive electrode 11 and the negative electrode 12 are wound in a spiral shape via the separator 13. An opening of the outer housing body 15 is closed by a sealing assembly 16. Hereinafter, a side of the sealing assembly 16 of the battery is considered to be up and a bottom side of the outer housing body 15 is considered to be down for convenience of description.

The non-aqueous electrolyte includes a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents is replaced with a halogen atom such as fluorine. For example, lithium salts such as LiPF₆ are used as the electrolyte salts.

The positive electrode 11, the negative electrode 12, and the separator 13 which constitute the electrode assembly 14 are all long, strip-like bodies which are wound in a spiral shape and stacked alternately in a radial direction of the electrode assembly 14. The negative electrode 12 is formed slightly larger than the positive electrode 11 in order to prevent lithium precipitation. In other words, the negative electrode 12 is formed longer than the positive electrode 11 in a length direction and a width direction. The separator 13 is formed slightly larger than at least the positive electrode 11 and, for example, two separators 13 are arranged so as to sandwich the positive electrode 11. The electrode assembly 14 includes a positive electrode lead 19 connected to the positive electrode 11 by welding or the like and a negative electrode lead 20 connected to the negative electrode 12 by welding or the like.

Insulating plates 17 and 18 are provided above and below the electrode assembly 14, respectively. The positive electrode lead 19 extends up and down through a through-hole in the insulating plate 17 and connects a filter 22 being a bottom plate of the sealing assembly 16 and the positive electrode 11 included in the electrode assembly 14 to each other. Accordingly, the positive electrode 11 and the sealing assembly 16 are connected to each other and a cap 26 that is a top plate of the sealing assembly 16 being electrically connected to the filter 22 becomes a positive electrode terminal. The positive electrode lead 19 is, for example, an aluminum lead. On the other hand, the negative electrode lead 20 passes through a through-hole in the insulating plate 18 to a bottom side of the outer housing body 15 and is welded to a bottom inner surface of the outer housing body 15. Accordingly, the negative electrode 12 and the outer housing body 15 are connected to each other and the outer housing body 15 becomes a negative electrode terminal. The negative electrode lead 20 is, for example, a nickel lead.

Three positive electrode leads 19 are connected to the positive electrode 11. Accordingly, a connection resistance between the positive electrode 11 and the sealing assembly 16 is reduced and the output characteristics of the non-aqueous electrolyte secondary battery 10 can be improved. Note that FIG. 1 only shows one of the three positive electrode leads. The number of positive electrode leads 19 that connect the positive electrode 11 and the sealing assembly 16 to each other may be greater than or equal to three. The greater the number of positive electrode leads 19, the lower the connection resistance but the higher the cost. Therefore, from the perspective of achieving both a reduction in connection resistance and cost, the number of positive electrode leads 19 is greater than or equal to three, preferably greater than or equal to 10, more preferably greater than or equal to 3 and less than or equal to 8, and particularly preferably greater than or equal to 3 and less than or equal to 6. Note that the three or more positive electrode leads 19 connected to the positive electrode 11 may be directly connected to the sealing assembly 16 or connected to the sealing assembly 16 via a current-collecting member. In addition, modes of the connection between the negative electrode 12 and the outer housing body 15 are not particularly limited and the connection may be realized using a plurality of negative electrode leads 20.

The outer housing body 15 is a bottomed cylindrical shape with an outer diameter greater than or equal to 25 mm. The outer diameter of the outer housing body 15 is preferably greater than or equal to 30 mm and more preferably greater than or equal to 35 mm. In addition, the outer diameter of the outer housing body 15 may be greater than or equal to 38 mm, greater than or equal to 40 mm, greater than or equal to 45 mm, or greater than or equal to 50 mm. For example, the outer diameter of the outer housing body 15 may be less than or equal to 60 mm. In this range, the volumetric energy density of the non-aqueous electrolyte secondary battery 10 can be improved. A thickness of the outer housing body 15 is, for example, greater than or equal to 0.1 mm and less than or equal to 2 mm. An inner diameter of the outer housing body 15 is preferably greater than or equal to 24 mm, more preferably greater than or equal to 29 mm, and particularly preferably greater than or equal to 34 mm. In addition, the inner diameter of the outer housing body 15 may be greater than or equal to 37 mm, greater than or equal to 39 mm, greater than or equal to 44 mm, or greater than or equal to 49 mm. For example, the outer housing body 15 is a metallic outer can.

A gasket 27 is provided between the outer housing body 15 and the sealing assembly 16 to ensure sealability of the interior of the non-aqueous electrolyte secondary battery 10. The outer housing body 15 has a grooved portion 21 which supports the sealing assembly 16 and which is formed by, for example, pressing a side surface portion from the outside. The grooved portion 21 is preferably formed in an annular shape along a circumferential direction of the outer housing body 15 and supports the sealing assembly 16 with an upper surface thereof.

The sealing assembly 16 includes the filter 22, a lower vent member 23, an insulating member 24, an upper vent member 25, and the cap 26 stacked in order from the side of the electrode assembly 14. Each member constituting the sealing assembly 16 has, for example, a disk shape or a ring shape and the respective members excluding the insulating member 24 are electrically connected to each other. The lower vent member 23 and the upper vent member 25 are connected to each other at respective centers thereof and the insulating member 24 is interposed between respective peripheral portions thereof. When internal pressure of the battery rises due to anomalous heat generation, for example, the lower vent member 23 breaks and causes the upper vent member 25 to swell toward a side of the cap 26 and away from the lower vent member 23, thereby severing the electrical connection between the two vent members. As the internal pressure increases further, the upper vent member 25 ruptures and gas is discharged through an opening 26a of the cap 26.

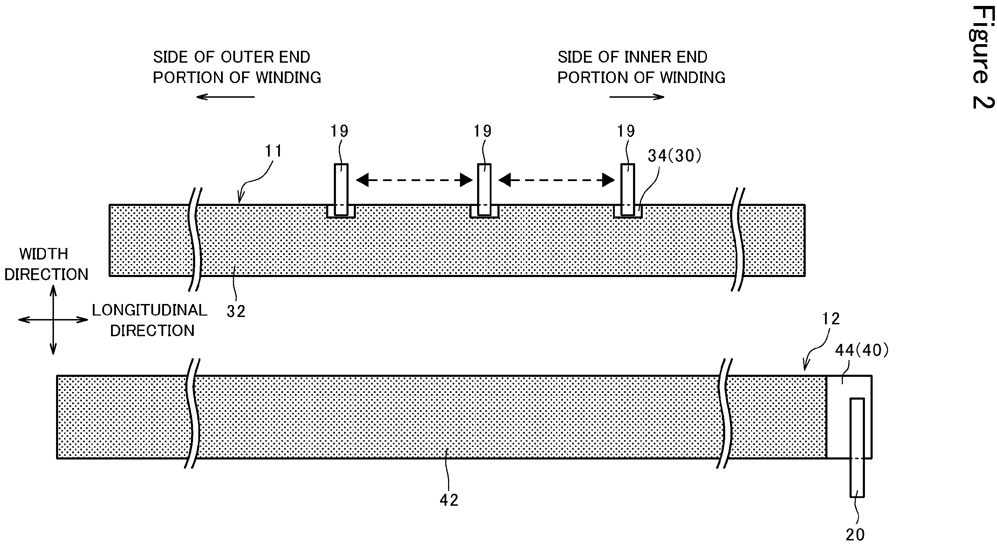

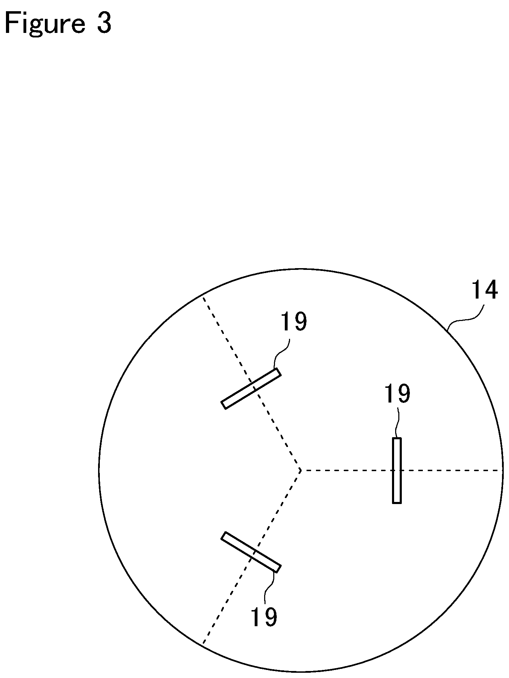

Next, modes of the connection between the positive electrode 11 and the positive electrode leads 19 will be described with reference to FIGS. 2 and 3. FIG. 2 is an example of a front view showing, in an expanded state, the positive electrode 11 and the negative electrode 12 that constitute the electrode assembly 14 provided in the non-aqueous electrolyte secondary battery 10 shown in FIG. 1. FIG. 3 is an example of a top view of the electrode assembly 14 provided in the non-aqueous electrolyte secondary battery 10 shown in FIG. 1.

The positive electrode 11 includes a positive electrode core 30 and a positive electrode mixture layer 32 formed on a surface of the positive electrode core 30. The negative electrode 12 includes a negative electrode core 40 and a negative electrode mixture layer 42 formed on a surface of the negative electrode core 40.

As shown in FIG. 2, the positive electrode 11 has an exposed portion 34 where the positive electrode core 30 in a part of a width direction of the positive electrode 11 is exposed. The exposed portion 34 is arranged in plurality in a longitudinal direction of the positive electrode. The positive electrode mixture layer 32 is present across the width direction between the exposed portions 34. This allows an area of the positive electrode mixture layer 32 to be increased while securing an area of the positive electrode core exposed portions 34 for the positive electrode leads 19 to be stably connected to the positive electrode core 30. As a result, internal resistance of the non-aqueous electrolyte secondary battery 10 decreases and output characteristics improve. In addition, one of the positive electrode leads 19 is connected to each of the positive electrode core exposed portions 34.

As shown in FIG. 2, the negative electrode 12 has an exposed portion 44 where the negative electrode core 40 is exposed at an inner end portion of a winding in the longitudinal direction. The negative electrode lead 20 is connected to the exposed portion 44.

In addition, as shown in FIG. 2, the three positive electrode leads may be connected to the positive electrode 11 at approximately equal intervals with respect to the longitudinal direction of the positive electrode 11. Accordingly, a bias of reactions in the longitudinal direction of the positive electrode 11 during charge and discharge is suppressed and an area of the positive electrode 11 that contributes to the reactions during charge and discharge can be increased. As a result, internal resistance of the non-aqueous electrolyte secondary battery 10 decreases and output characteristics improve.

Furthermore, as shown in FIG. 3, the three positive electrode leads 19 may be arranged so that central angles formed by radial lines passing through a circumferential center of the positive electrode leads 19 are approximately equal. Accordingly, a bias of reactions in the longitudinal direction of the positive electrode 11 during charge and discharge is suppressed and an area of the positive electrode 11 that contributes to the reactions during charge and discharge can be increased. As a result, internal resistance of the non-aqueous electrolyte secondary battery 10 decreases and output characteristics improve. Furthermore, connecting the positive electrode leads 19 in the mode shown in FIG. 3 prevents each positive electrode lead 19 from being obstructed by the other positive electrode leads 19 and enables the positive electrode leads 19 to be readily joined to the filter 22.

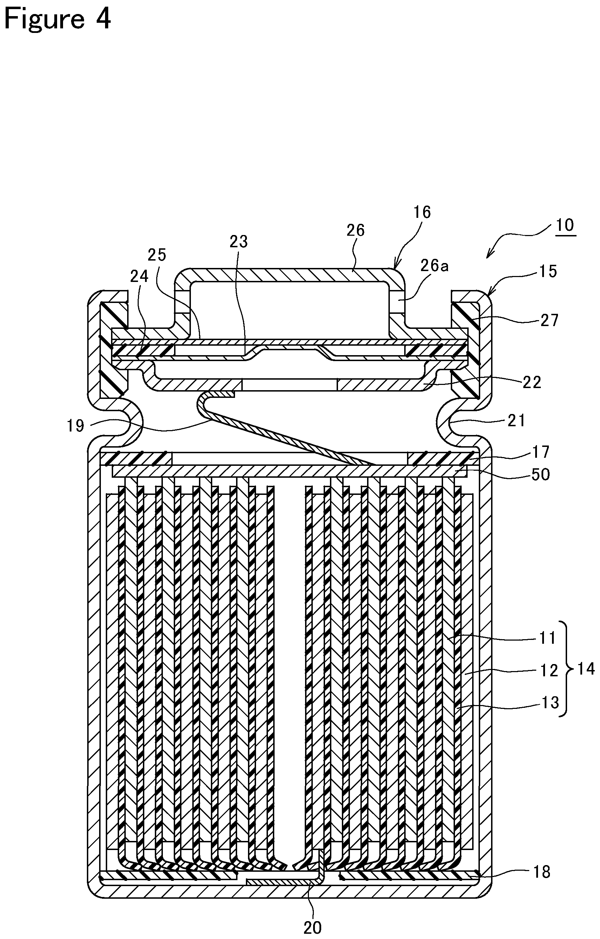

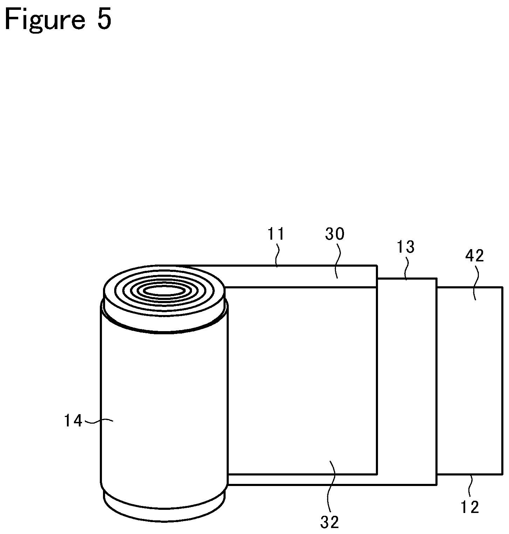

Hereinafter, another example of an embodiment of a cylindrical secondary battery according to the present disclosure will be described in detail with reference to FIGS. 4 and 5. In the following embodiment, same components as in the embodiment shown in FIG. 1 will be assigned the same reference numerals and descriptions thereof will not be repeated. In addition, in the following embodiment, descriptions of advantageous effects and modifications similar to the embodiment shown in FIG. 1 will not be repeated.

FIG. 4 is a diagram which corresponds to FIG. 1 in another example of an embodiment. As shown in FIG. 4, an upper end of the positive electrode 11 included in the electrode assembly 14 is connected to a positive electrode current-collecting member 50 and the positive electrode current-collecting member 50 and the sealing assembly 16 are connected to each other by the positive electrode leads 19. Accordingly, the positive electrode 11 and the sealing assembly 16 are connected to each other and the cap 26 that is a top plate of the sealing assembly 16 being electrically connected to the filter 22 becomes a positive electrode terminal. On the other hand, the negative electrode 12 is connected to the outer housing body 15 by the negative electrode lead 20 in a similar manner to the embodiment shown in FIG. 1. Note that the negative electrode 12 may be connected to the negative electrode current-collecting member and the negative electrode current-collecting member and the outer housing body 15 may be connected to each other by the negative electrode lead 20 in a similar manner to the positive electrode 11 of the embodiment shown in FIG. 4.

While a material, a shape, and the like of the positive electrode current-collecting member 50 are not particularly limited as long as the positive electrode current-collecting member 50 can be connected to the positive electrode 11 and the sealing assembly 16, for example, the positive electrode current-collecting member 50 may be a disk-shaped member made of aluminum. In addition, the positive electrode current-collecting member 50 may have one or a plurality of holes at any position from the perspective of electrolyte circulation or the like.

Next, a configuration of the electrode assembly 14 will be described with reference to FIG. 5. FIG. 5 is a perspective view of the electrode assembly 14 in the non-aqueous electrolyte secondary battery 10 shown in FIG. 4, the perspective view being a diagram showing configurations of the positive electrode 11, the negative electrode 12, and the separator 13 in a state where a vicinity of an outer end portion of a winding has been expanded. In the electrode assembly 14, the positive electrode 11 protrudes above the negative electrode 12 and the separator 13. Accordingly, an upper end portion of the positive electrode 11 is connected to the positive electrode current-collecting member 50. The positive electrode 11 includes, in the upper end portion, the exposed portion 34 where the positive electrode core 30 is exposed. In other words, the exposed portion 34 is connected to the positive electrode current-collecting member 50. Accordingly, the positive electrode 11 and the positive electrode current-collecting member 50 can be more reliably connected to each other.

Hereinafter, the positive electrode 11, the negative electrode 12, and the separator 13 which constitute the electrode assembly 14 will be described in detail, with a particular focus on the positive electrode 11. Note that the positive electrode 11, the negative electrode 12, and the separator 13 described below can be applied to any of the embodiments described above.

### [Positive Electrode]

The positive electrode 11 includes the positive electrode core 30 and the positive electrode mixture layer 32 formed on a surface of the positive electrode core 30. The positive electrode mixture layer 32 is preferably formed on both surfaces of the positive electrode core 30. As the positive electrode core 30, a foil of a metal that is stable in a potential range of the positive electrode 11 such as aluminum or an aluminum alloy or a film with the metal arranged on a surface layer can be used.

The positive electrode mixture layer 32 contains a positive electrode active material. In addition, the positive electrode mixture layer 32 may further contain a conductive agent, a binding agent, or the like. For example, the positive electrode mixture layer 32 can be fabricated by coating a surface of the positive electrode core 30 with a positive electrode slurry including the positive electrode active material, the conductive agent, the binding agent, and the like, letting the coating dry, and then rolling the coated positive electrode core 30.

A basis weight of the positive electrode mixture layer 32 is greater than or equal to 250 g/m². Accordingly, the volumetric energy density of the non-aqueous electrolyte secondary battery 10 can be improved. While the basis weight of the positive electrode mixture layer 32 should be greater than or equal to 250 g/m² from the perspective of improving the volume energy density, an excessive basis weight of the positive electrode mixture layer 32 tends to lower the cycle characteristics of the non-aqueous electrolyte secondary battery 10. For this reason, the basis weight of the positive electrode mixture layer 32 is preferably less than or equal to 600 g/m² and more preferably less than or equal to 500 g/m². Therefore, an example of a preferable range of the basis weight of the positive electrode mixture layer 32 is greater than or equal to 250 g/m² and less than or equal to 600 g/m². A thickness of the positive electrode mixture layer 32 is, for example, greater than or equal to 10 µm and less than or equal to 150 µm on one side of the positive electrode core 30.

The positive electrode active material included in the positive electrode mixture layer 32 includes a lithium-containing composite oxide with a layered rock salt structure. Examples of the layered rock salt structure of the lithium-containing composite oxide include a layered rock salt structure belonging to the space group R-3m and a layered rock salt structure belonging to the space group C2/m. The lithium-containing composite oxide preferably has a layered rock salt structure belonging to the space group R-3m from the perspectives of high capacity and crystal structure stability. The layered rock salt structure of the lithium-containing composite oxide may include a transition metal layer and a Li layer.

For example, the lithium-containing composite oxide includes secondary particles formed by agglomeration of primary particles. A particle diameter of the primary particles that make up the secondary particles is, for example, greater than or equal to 0.02 µm and less than or equal to 2 µm. The particle diameter of the primary particles is measured as a diameter of a circumscribed circle in a particle image observed by a scanning electron microscope (SEM).

An average particle diameter of the secondary particles of the lithium-containing composite oxide is, for example, greater than or equal to 2 µm and less than or equal to 30 µm. In this case, the average particle diameter means a median diameter (D50) on a volumetric basis. D50 means a particle diameter at which a cumulative frequency in a particle size distribution on a volumetric basis is 50% from the smallest particle diameter and is also referred to as a median diameter. The particle size distribution of the secondary particles can be measured using a laser diffraction particle size distribution analyzer (for example, MT3000II manufactured by MicrotracBEL Corp.) and using water as a dispersion medium.

From the perspective of higher capacity, with respect to the total number of moles of metal elements excluding Li, the lithium-containing composite oxide preferably contains greater than or equal to 70 mol% Ni and more preferably contains greater than or equal to 80 mol% Ni. With respect to the total number of moles of metal elements excluding Li, the Ni content may be greater than or equal to 85 mol% or greater than or equal to 90 mol%. An upper limit of the Ni content is, for example, 95 mol%.

The lithium-containing composite oxide can be a composite oxide represented by the general formula LiₐNiₓCo_{y}Al_{z}Mn_{w}M1ᵥO_{2-b} wherein 0.95 ≤ a ≤ 1.05, 0.7 ≤ x ≤ 0.95, 0 ≤ y ≤ 0.15, 0 ≤ z ≤ 0.1, 0 ≤ w ≤ 0.3, 0 ≤ v ≤ 0.1, 0 ≤ b ≤ 0.05, x + y + z + w + v = 1, and M1 contains at least one element selected from the group consisting of Fe, Ti, Si, Nb, Zr, Mo, W and Zn. Note that the positive electrode active material may include a lithium-containing composite oxide other than those represented by the general formula described above or other compounds to the extent that the object of the present disclosure is not impaired. The mole fraction of metal elements contained in all particles of the lithium-containing composite oxide in the total lithium-containing composite oxide particles is measured by inductively coupled plasma (ICP) atomic emission spectrometry.

A surface-modified layer is present on surfaces of particles of the lithium-containing composite oxide. Specifically, the surface-modified layer is present on at least one of the surfaces of the secondary particles and the interfaces between the primary particles of the lithium-containing composite oxide. The surface-modified layer may be present in a dotted manner so as to cover at least a portion of the surfaces of the particles of the lithium-containing composite oxide or may be present so as to cover the entire surfaces of the particles.

The surface-modified layer includes at least one element of Ca and Sr and at least one element selected from the group consisting of W, Mo, Ti, Si, Nb, and Zr.
Specifically, for example, the surface-modified layer includes a compound containing at least one element of Ca and Sr and at least one element selected from the group consisting of W, Mo, Ti, Si, Nb, and Zr. In addition, for example, the surface-modified layer includes a compound containing at least one element of Ca and Sr and a compound containing at least one element selected from the group consisting of W, Mo, Ti, Si, Nb, and Zr. The presence of the surface-modified layer on the surfaces of particles of the lithium-containing composite oxide effectively suppresses erosion and degradation of the lithium-containing composite oxide due to side reactions with the electrolyte. As a result, cycle characteristics of the non-aqueous electrolyte secondary battery 10 improve. In addition, the presence of the surface-modified layer on the surfaces of particles of the lithium-containing composite oxide promotes the transfer of Li between the positive electrode active material and the electrolyte and reduces reaction resistance in the positive electrode. As a result, internal resistance of the battery decreases and output characteristics further improve.

Examples of a compound containing at least one element of Ca and Sr and at least one element selected from the group consisting of W, Mo, Ti, Si, Nb, and Zr include a compound represented by the general formula AₓB_{y}O_{z} wherein 1 ≤ x ≤ 2, 1 ≤ y ≤ 5, 4 ≤ z ≤ 9, A is at least one selected from Ca and Sr, and B is at least one selected from the group consisting of W, Mo, Ti, Si, Nb, and Zr (hereinafter referred to as a "AₓB_{y}O_{z} compound").

Specific examples of the AₓB_{y}O_{z} compound include CaWO₄, CaMoO₃, CaMoO₄, CaTiO₃, Ca₂TiO₄, CaSiO₃, Ca₂SiO₄, CaNbO₃, CaNb₂O₆, CaZrO₃, CaZr₄O₉, SrWO₄, SrMoO₃, SrMoO₄, SrTiO₃, Sr₂TiO₄, SrSiO₃, Sr₂SiO₄, SrNbO₃, SrNb₂O₆, SrZrO₃, and SrZr₄O₉.

The presence of the AₓB_{y}O_{z} compound can be confirmed by using a synchrotron radiation X-ray diffraction measurement. The AₓB_{y}O_{z} compound may be present in a dotted manner so as to cover at least a portion of the surfaces of the particles of the lithium-containing composite oxide or may be present so as to cover the entire surfaces of the particles.

Specific examples of a compound containing Ca include Ca(OH)₂, CaO, CaCO₃, CaSO₄, and Ca(NO₃)₂. Specific examples of a compound containing Sr include Sr(OH)₂, Sr(OH)₂·8H₂O, Sr(OH)₂·H₂O, SrO, SrCO₃, SrSO₄, and Sr(NO₃)₂. Examples of a compound containing at least one element selected from the group consisting of W, Mo, Ti, Si, Nb, and Zr include oxides, hydroxides, carbonates, and sulfates containing at least one element selected from the group consisting of W, Mo, Ti, Si, Nb, and Zr.

A total amount of Ca and Sr contained in the surface-modified layer is preferably less than or equal to 5 mol% with respect to the total molar amount of metal elements excluding Li in the lithium-containing composite oxide. A lower limit value of the total amount of Ca and Sr is, for example, 0.001 mol%.

A total amount of W, Mo, Ti, Si, Nb, and Zr contained in the surface-modified layer is preferably less than or equal to 5 mol% with respect to the total molar amount of metal elements excluding Li in the lithium-containing composite oxide. A lower limit value of the total amount of W, Mo, Ti, Si, Nb, and Zr is, for example, 0.001 mol%.

The presence of the surface-modified layer on the surface of particles of the lithium-containing composite oxide and the total amount of metal elements contained in the surface-modified layer can be confirmed by measuring a cross section of the particles of the lithium-containing composite oxide using TEM-EDX (transmission microscopy-energy dispersive X-ray spectroscopy).

The positive electrode mixture layer 32 may include other positive electrode active materials in addition to the positive electrode active material according to the present embodiment described above. Examples of the other positive electrode active materials include a lithium-containing composite oxide in which a surface-modified layer is not present on surfaces of particles.

In addition, the conductive agent included in the positive electrode mixture layer 32 preferably includes carbon fibers. In the positive electrode mixture layer 32, a content of carbon fibers may be greater than or equal to 0.01 mass% and less than or equal to 1 mass% with respect to a total mass of the positive electrode active material. Accordingly, conceivably, a conductive path of the positive electrode mixture layer 32 is secured and a contribution is made toward improving cycle characteristics. When the content of carbon fibers is less than 0.01 mass%, the conductive path of the positive electrode mixture layer 32 is not sufficiently secured, and when the content of carbon fibers is greater than 1 mass%, the migration of the electrolyte in the positive electrode mixture layer 32 is readily inhibited and durability tends to decline.

Known materials used as a conductive agent of a battery can be used as the carbon fibers and examples include a carbon nanotube (CNT), a carbon nanofiber (CNF), a vapor grown carbon fiber (VGCF), a field spun carbon fiber, a polyacrylonitrile (PAN)-based carbon fiber, and a pitch-based carbon fiber.

Among the carbon fibers exemplified above, for example, the carbon fibers preferably include carbon nanotubes (CNTs) in terms of further suppressing capacity loss associated with charge-discharge cycles. Examples of CNTs include single-walled carbon nanotubes (SWCNTs) and multi-walled carbon nanotubes (MWCNTs). A single-walled carbon nanotube (SWCNT) is a carbon nanostructure with a single layer of graphene sheets forming a single cylindrical shape, while a multi-walled carbon nanotube is a carbon nanostructure with two or more layers of graphene sheets stacked concentrically to form a single cylindrical shape. Note that a graphene sheet refers to a layer of graphite crystals in which carbon atoms in the sp2 hybridized orbitals are located at vertices of a regular hexagon. Shapes of the carbon nanotubes are not limited. Examples of such shapes include a variety of forms such as a needle shape, a cylindrical tube shape, a fishbone shape (fishbone or cup stacked), a trump shape (platelet), and a coil shape.

In addition, the conductive agent included in the positive electrode mixture layer 32 preferably includes amorphous carbon. In the positive electrode mixture layer 32, a content of amorphous carbon may be greater than or equal to 1 mass% and less than or equal to 3 mass% with respect to a total mass of the positive electrode active material. Accordingly, conductivity between particles of the positive electrode active material is enhanced and output characteristics of the battery may improve. Examples of the amorphous carbon include carbon materials such as carbon black (CB), acetylene black (AB), Ketjen black, and graphite. One of these substances may be used independently or two or more of these substances may be used in combination.

The positive electrode mixture layer 32 may further contain Li₂NiO₂. Li₂NiO₂ contains a large amount of Li and functions as a Li compensator to supply Li ions to the negative electrode 12 during initial charge-discharge. Li₂NiO₂ may have a structure identified in the space group Immm.

A mass of Li₂NiO₂ included in the positive electrode mixture layer 32 may be greater than or equal to 1 mass% and less than or equal to 10 mass% with respect to a total mass of the positive electrode active material included in the positive electrode mixture layer 32. If the mass of Li₂NiO₂ included in the positive electrode mixture layer 32 is greater than or equal to 1 mass%, a sufficient amount of Li ions can be supplied to the negative electrode 12. In addition, as will be described later, at least a part of Li₂NiO₂ is transformed into a compound represented by the general formula LiₐNi₂₋ₐO₂ (0 < a ≤ 0.5). When the mass of Li₂NiO₂ included in the positive electrode mixture layer 32 is more than 10 mass%, battery capacity tends to decline. This is because the compound represented by the general formula LiₐNi₂₋ₐO₂ (0 < a ≤ 0.5) has a smaller contribution toward charge-discharge capacity than lithium-containing composite oxides.

A part of or all of Li₂NiO₂ after initial charge and discharge is transformed into, for example, a compound represented by the general formula LiₐNi₂₋ₐO₂ (0 < a ≤ 0.5). In other words, the positive electrode mixture layer 32 may further contain a compound represented by the general formula LiₐNi₂₋ₐO₂ (0 < a ≤ 0.5). The compound represented by LiₐNi₂₋ₐO₂ (0 < a ≤ 0.5) releases and absorbs Li ions during charge and discharge and functions as a positive electrode active material.

A mass of the compound represented by LiₐNi₂₋ₐO₂ (0 < a ≤ 0.5) included in the positive electrode mixture layer 32 may be greater than or equal to 0.1 mass% and less than or equal to 5 mass% with respect to a total mass of the positive electrode active material included in the positive electrode mixture layer 32. If the mass of the compound represented by the general formula LiₐNi₂₋ₐO₂ (0 < a ≤ 0.5) included in the positive electrode mixture layer 32 is greater than or equal to 0.1 mass%, a sufficient amount of Li ions can be supplied to the negative electrode. In addition, when the mass of the compound represented by the general formula LiₐNi₂₋ₐO₂ (0 < a ≤ 0.5) included in the positive electrode mixture layer 32 is more than 5 mass%, battery capacity tends to decline. This is because the compound represented by the general formula LiₐNi₂₋ₐO₂ (0 < a ≤ 0.5) has a smaller contribution toward charge-discharge capacity than lithium-containing composite oxides.

The positive electrode mixture layer 32 may further contain a binding agent. Examples of the binding agent included in the positive electrode mixture layer 32 include fluorinated resins such as polytetrafluoroethylene (PTFE) and polyvinylidene fluoride (PVDF), polyimide resins, acrylic resins, polyolefin resins, and polyacrylonitrile (PAN). One of these substances may be used independently or two or more of these substances may be used in combination.

Next, an example of a method of manufacturing a positive electrode active material that includes an AₓB_{y}O_{z} compound in the surface-modified layer according to the present embodiment will be described.

Manufacturing steps of the positive electrode active material include: a mixing step of mixing a composite oxide and a Li compound and the like to obtain a mixture; a calcining step of calcining the mixture to obtain a lithium-containing composite oxide; and a rinsing step of rinsing the calcined article with water and heating and drying the rinsed calcined article. Adding a raw material containing an element A and a raw material containing an element B in the mixing step enables a surface-modified layer to be formed on the surfaces of the particles of the lithium-containing composite oxide.

In the mixing step, for example, a mixture is obtained by mixing a metal oxide containing greater than or equal to 70 mol% and less than or equal to 95 mol% of Ni, greater than or equal to 0 mol% and less than or equal to 15 mol% of Co, and greater than or equal to 0 mol% and less than or equal to 25 mol% of Mn, a Li compound, a raw material containing the element A, and a raw material containing the element B.

The metal oxide is obtained by, for example, dropping an alkaline solution such as sodium hydroxide into a solution of metal salts containing Ni and arbitrary metallic elements (Co, Mn, and the like) while stirring the solution and adjusting pH to the alkaline side (for example, greater than or equal to 8.5 and less than or equal to 12.5) to precipitate (coprecipitate) a complex hydroxide containing Ni and the arbitrary metallic elements and subjecting the complex hydroxide to a heat treatment. While a heat treatment temperature is not particularly limited, for example, the heat treatment temperature is greater than or equal to 250°C and less than or equal to 600°C.

Examples of a Li compound include Li₂CO₃, LiOH, Li₂O₂, Li₂O, LiNO₃, LiNO₂, Li₂SO₄, LiOH·H₂O, LiH, and LiF. A mixing ratio of the metal oxide and the Li compound is preferably a ratio where the molar ratio of Li to a total amount of metal elements in the metal oxide ranges, for example, from 1:0.98 to 1:1.1 in order to facilitate adjustment of each of the parameters described above to the ranges specified above.

Examples of the raw material containing the element A include Ca(OH)₂, CaO, CaCO₃, CaSO₄, Ca(NO₃)₂, Sr(OH)₂, Sr(OH)₂·8H₂O, Sr(OH)₂·H₂O, SrO, SrCO₃, SrSO₄, and Sr(NO₃)₂. The compounds may be dried and dehydrated before use in order to reduce the amount of water generated during calcining. In addition, the compounds may be pulverized or otherwise reduced to a particle size greater than or equal to 0.1 µm and less than or equal to 20 µm.

Examples of the raw material containing the element B include hydroxides, oxides, carbonates, sulfates, and nitrates of the element B. The compounds may be dried and dehydrated before use in order to reduce the amount of water generated during calcining. In addition, the compounds may be pulverized or otherwise reduced to a particle size greater than or equal to 0.1 µm and less than or equal to 20 µm.

The metal oxide and the raw material containing the element A are preferably mixed in a ratio where, for example, the molar ratio of the total amount of metal elements in the metal oxide to the element A ranges from 1:0.0001 to 1:0.02. When the raw material containing the element A is to be used in plurality, mixing is performed so that a total amount of the element A included in the compound satisfies this ratio. The preferable mixing ratio with the metal oxide similarly applies to the raw material containing the element B.

A combustion step is a multi-stage calcining step that includes, for example, at least a first calcining step of performing calcination under an oxygen stream at a temperature greater than or equal to 300°C and less than or equal to 680°C and a second calcining step of calcining the calcined article obtained by the first calcining step under an oxygen stream at a temperature greater than 680°C. In the first calcining step, the temperature is raised to a first set temperature of less than or equal to 680°C at a first rate of temperature rise that is greater than or equal to 0.2°C/min and less than or equal to 4.5°C/min. **In** the second calcining step, the temperature is raised to a second set temperature of less than or equal to 900°C at a rate that is greater than or equal to 0.5°C/min and less than or equal to 3.5°C/min. Note that the first and second rates of temperature rise may be set in plurality in each temperature area within the ranges defined above.

A holding time of the first set temperature in the first calcining step is preferably less than or equal to 5 hours and more preferably less than or equal to 3 hours. The holding time of the first set temperature is the time during which the first set temperature is maintained after being reached and the holding time may be zero. A holding time of the second set temperature in the second calcining step is preferably greater than or equal to 1 hour and less than or equal to 10 hours and more preferably greater than or equal to 1 hour and less than or equal to 5 hours. The holding time of the second set temperature is the time during which the second set temperature is maintained after being reached. Calcining of the mixture is performed, for example, in an oxygen stream with an oxygen concentration of greater than or equal to 60%, and a flow rate of the oxygen stream is set greater than or equal to 0.2 mL/min and less than or equal to 4 mL/min per 10 cm³ of a firing furnace or greater than or equal to 0.3 L/min per 1 kg of the mixture.

In the rinsing step, the calcined article obtained by the calcining step is rinsed to remove impurities and the rinsed calcined article is heated and dried. When necessary, the calcined article is crushed, classified, and the like to adjust the D50 of the positive electrode active material to a desired range. Drying of the calcined article after rinsing may be performed at a temperature lower than 100°C. An example of a preferable drying temperature is greater than or equal to 150°C and less than or equal to 600°C. The drying treatment may be performed under vacuum, in an oxygen stream, or in air. An example of a drying treatment time is greater than or equal to 1 hour and less than or equal to 5 hours. An Me raw material may be added to a cake-like composition after rinsing or during the heating and drying step. Examples of the Me raw material that is added after rinsing or during the heating and drying step include tungsten oxide (WO₃), lithium tungstate (Li₂WO₄, Li₄WO₅, Li₆W₂O₉), boric acid (H₃BO₃), lithium borate (Li₂B₄O₇, Li₃BO₃, LiB₃O₅, LiBO₂), aluminum oxide (Al₂O₃), and aluminum sulfate (Al₂(SO₄)₃).

### [Negative Electrode]

The negative electrode 12 includes the negative electrode core 40 and the negative electrode mixture layer 42 formed on a surface of the negative electrode core 40. The negative electrode mixture layer 42 is preferably formed on both surfaces of the negative electrode core 40. As the negative electrode core 40, a foil of a metal that is stable in a potential range of the negative electrode 12 such as copper or a copper alloy or a film with the metal arranged on a surface layer can be used. The negative electrode mixture layer 42 may include a negative electrode active material and a binding agent. A thickness of the negative electrode mixture layer 42 is, for example, greater than or equal to 10 µm and less than or equal to 150 µm on one side of the negative electrode core 40. For example, the negative electrode 12 can be fabricated by coating a surface of the negative electrode core 40 with a negative electrode slurry containing the negative electrode active material, the binding agent, and the like, letting the coating dry, and then rolling the negative electrode 12 to form the negative electrode mixture layer 42 on both surfaces of the negative electrode core 40.

The negative electrode active material included in the negative electrode mixture layer 42 is not particularly limited as long as lithium ions can be reversibly absorbed and released and, generally, a carbon material such as graphite is used. The graphite may be any of a natural graphite such as scale graphite, lump graphite, and earth graphite or an artificial graphite such as lump artificial graphite and graphitized mesophase carbon microbeads. In addition, as the negative electrode active material, metals that alloy with Li such as Si and Sn, metal compounds containing Si, Sn, or the like, lithium-titanium composite oxides, and the like may be used. Materials obtained by providing a carbon coating on the materials described above may be used. For example, a Si-containing compound represented by SiOₓ (0.5 ≤ x ≤ 1.6), a Si-containing compound with Si particles dispersed in a lithium silicate phase represented by Li_{2y}SiO_{(2+y)} (0 < y < 2), or the like may be used with graphite.

Examples of the binding agent included in the negative electrode mixture layer 42 include styrene-butadiene rubber (SBR), nitrile-butadiene rubber (NBR), carboxymethyl cellulose (CMC) or its salts, polyacrylic acid (PAA) or its salts (PAA-Na, PAA-K, or the like and even partially neutralized salts), and polyvinyl alcohol (PVA). One of these substances may be used independently or two or more of these substances may be used in combination.

### [Separator]

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13.

A filler layer including an inorganic filler may be formed at an interface between the separator 13 and at least one of the positive electrode 11 and the negative electrode 12. Examples of the inorganic filler include oxides containing metallic elements such as Ti, Al, Si, and Mg, and phosphoric acid compounds. The filler layer can be formed by applying a slurry containing the filler to the surface of the positive electrode 11, the negative electrode 12, or the separator 13.

### EXAMPLES

While the present disclosure will be described below in greater detail by citing examples, it is to be understood that the present disclosure is not limited to the following examples.

### <Example 1>

### [Fabrication of Positive Electrode Active Material]

A composite hydroxide represented by [Ni_{0.70}Co_{0.15}Mn_{0.15}](OH)₂ obtained by the coprecipitation method was calcined at 500°C for 8 hours to obtain a metal oxide (Ni_{0.70}Co_{0.15}Mn_{0.15}O₂). Next, Ca(OH)₂, MoO₃, and WO₃ were added to the metal oxide described above so that, with respect to a total amount of Ni, Co, and Mn, a molar ratio of Ca was 0.4 mol%, a molar ratio of Mo was 0.2 mol%, and a molar ratio of W was 0.2 mol%. Furthermore, lithium hydroxide monohydrate (LiOH·H₂O) was mixed to obtain a mixture with a molar ratio of Li to the total amount of Ni, Co, Mn, Ca, and W of 103 mol% (mixing step). The mixture was calcined under an oxygen stream with a 95% oxygen concentration (flow rate: 5 L/min per 1 kg mixture) from room temperature to 650°C at a rate of temperature rise of 2.0°C/min and then from 650°C to 740°C at a rate of temperature rise of 0.5°C/min to obtain a calcined article (combustion step). Subsequently, the lithium-containing composite oxide was rinsed and dried to obtain a positive electrode active material according to Example 1 (rinsing step).

A measurement of the obtained positive electrode active material using an ICP emission spectrometer (Thermo Fisher Scientific, iCAP6300) confirmed the elements listed in Table 1 to be described later as elements excluding Li, O, and impurity elements. In addition, an identification of compounds present in the positive electrode active material by a synchrotron radiation X-ray diffraction measurement confirmed the presence of CaMoO₄ and CaWO₄ as AₓB_{y}O_{z} compounds.

### [Fabrication of Positive Electrode]

A positive electrode slurry was prepared by mixing 100 mass% of the positive electrode active material described above, 0.1 mass% of carbon nanotubes (outermost diameter (ϕ) 1.5 nm, fiber length (L) 12 µm) as a conductive agent, and 2 mass% of polyvinylidene fluoride as a binding agent and, further, mixing this mixture with N-methyl-2-pyrrolidone (NMP). Next, the slurry was applied to a positive electrode core made of an aluminum foil with a thickness of 15 µm so that a basis weight was 250 g/m², the coating was dried, rolled by a rolling roller, and cut into a predetermined electrode size to be accommodated in an outer housing body with an outer diameter of ϕ50 mm to obtain a positive electrode in which positive electrode mixture layers are formed on both surfaces of the positive electrode core. An exposed portion where a surface of the positive electrode core is exposed was provided at the upper end portion of the positive electrode.

### [Fabrication of Negative Electrode]

Natural graphite was used as a negative electrode active material. A negative electrode slurry was prepared by mixing the negative electrode active material, sodium carboxymethylcellulose (CMC-Na), and styrene-butadiene rubber (SBR) in a 100:1:1 solid mass ratio in an aqueous solution. The negative electrode slurry was applied to both surfaces of a negative electrode core made of a copper foil, the coating was dried, rolled using a rolling roller, and cut to a predetermined electrode size to obtain a negative electrode with negative electrode mixture layers formed on both surfaces of the negative electrode core. An exposed portion where a surface of the negative electrode core is exposed was provided in a part of the negative electrode.

### [Preparation of Non-Aqueous Electrolyte]

Ethylene carbonate (EC), ethyl methyl carbonate (EMC), and dimethyl carbonate (DMC) were mixed in a 3:3:4 volume ratio. A non-aqueous electrolyte was prepared by dissolving lithium hexafluorophosphate (LiPF6) in the mixed solvent to a concentration of 1.2 mol/liter.

### [Fabrication of Test Cell]

Aluminum leads were attached to the exposed portion of the positive electrode described above so that six aluminum leads were connected to the positive electrode at approximately equal intervals with respect to the longitudinal direction of the positive electrode as shown in FIG. 2. In addition, a single nickel lead was attached to the exposed portion of the negative electrode described above. A wound electrode assembly was fabricated by spirally winding the positive electrode and the negative electrode via a polyolefin separator. The electrode assembly was accommodated inside an outer housing body with an outer diameter of 50 mm, the non-aqueous electrolyte described above was injected into the outer housing body, and an opening at an upper end of the outer housing body was sealed by a sealing assembly to obtain a test cell.

### [Assessment of Volumetric Energy Density]

In a temperature environment of 25°C, the test cell was subjected to a constant-current charge at 0.1 It until a battery voltage reached 4.2 V, a constant-voltage charge at 4.2 V until a current value reached 0.01 It, and a constant-current discharge at 0.1 It until the battery voltage reached 2.5 V. Furthermore, in a temperature environment of 25°C, the test cell was subjected to a constant-current charge at 0.1 It until the battery voltage reached 4.2 V, a constant-voltage charge at 4.2 V until a current value reached 0.01 It, a constant-current discharge at 0.2 It until the battery voltage reached 2.5 V, and a discharge capacity at this point was adopted as an initial discharge capacity. The initial discharge capacity was divided by the capacity of the test cell to calculate a volumetric energy density. Note that during the charge and discharge described above, a 10-minute pause was provided during the transition from charge to discharge. The volumetric energy density of the test cell according to Example 1 was 668 Wh/L.

### [Evaluation of Internal Resistance]

Under a temperature condition of 25°C, the test cell was subjected to a constant-current charge at 0.3 It until a cell voltage reached 4.2 V and subsequently subjected to a constant-voltage charge at 4.2 V until a current value reached 1/50 It. Subsequently, a constant-current discharge was conducted at 1.0 It for 10 seconds and an internal resistance was obtained by dividing the voltage dropped during the 10 seconds by the current value.

### [Assessment of Capacity Retention Rate]

In an environment of 25°C, the test cell was charged at a constant current of 0.2 It until the battery voltage reached 4.2 V and subsequently charged at a constant voltage of 4.2 V until the current value reached 0.01 It. Subsequently, the test cell was discharged at a constant current of 0.2 It until the battery voltage reached 2.5 V. With the charge and discharge described above as one cycle, 300 cycles were performed. The capacity retention rate of the test cell in the charge/discharge cycles was calculated using the following equation. Capacity retention rate = (discharged capacity at 300th cycle/discharged capacity at 1st cycle) × 100

### <Comparative Example 1>

A test cell was fabricated and assessed in a similar manner to Example 1 with the exception of not adding Ca(OH)₂, MoO₃, and WO₃ during the fabrication of the positive electrode active material.

### <Comparative Example 2>

A test cell was fabricated and assessed in a similar manner to Example 1 with the exception of changing the number of aluminum leads to one during the fabrication of the test cell.

### <Comparative Example 3>

A test cell was fabricated and assessed in a similar manner to Example 1 with the exception of coating the positive electrode slurry to attain a basis weight of 200 g/m² during the fabrication of the positive electrode.

### <Comparative Example 4>

A test cell was fabricated and assessed in a similar manner to Example 1 with the exception of obtaining the positive electrode by cutting the positive electrode into a predetermined electrode size that is accommodated in an outer housing body with an outer diameter of 18 mm during the fabrication of the positive electrode and accommodating the electrode assembly in the outer housing body with an outer diameter of 18 mm during the fabrication of the test cell.

Table 1 shows the volumetric energy density, the internal resistance, and the capacity retention rate for each of the test cells in Example 1 and Comparative Examples 1 to 4. Table 1 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 1 are expressed relative to values of Comparative Example 1 being 100.

**[Table 1]**

| | Positive electrode active material constituent elements [mol%] | | | | AₓB_{y}O_{z} compou nd | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 1 | 70.0 | 15.0 | 15.0 | Ca0.4,Mo0.2 ,WO.2 | CaMoO₄ | 50 | 250 | 0.1 | - | - | Approximately equal intervals | 6 | 100 | 84 | 220 |
| | | | | | CaWO₄ | | | | | | | | | | |
| Comparative Example 1 | 70.0 | 15.0 | 15.0 | - | - | 50 | 250 | 0.1 | - | - | Approximately equal intervals | 6 | 100 | 100 | 100 |
| Comparative Example 2 | 70.0 | 15.0 | 15.0 | Ca0.4,Mo0.2 ,WO.2 | CaMoO₄ | 50 | 250 | 0.1 | - | - | - | 1 | 108 | 151 | 220 |
| | | | | | CaWO₄ | | | | | | | | | | |
| Comparative Example 3 | 70.0 | 15.0 | 15.0 | Ca0.4,Mo0.2 ,WO.2 | CaMoO₄ | 50 | 200 | 0.1 | - | - | Approximately equal intervals | 6 | 88 | 81 | 242 |
| | | | | | CaWO₄ | | | | | | | | | | |
| Comparative Example 4 | 70.0 | 15.0 | 15.0 | Ca0.4,Mo0.2 ,WO.2 | CaMoO₄ | 18 | 250 | 0.1 | - | - | Approximately equal intervals | 6 | 80 | 75 | 230 |
| | | | | | CaWO₄ | | | | | | | | | | |

### <Example 2>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.75}Co_{0.10}Mn_{0.15}O₂.
(2) In the mixing step in the fabrication of the positive electrode active material, Ca(OH)₂, Sr(OH)₂, WO₃, and TiO₂ were added so that, with respect to a total amount of Ni, Co, and Mn, a molar ratio of Ca was 0.2 mol%, a molar ratio of Sr was 0.2 mol%, a molar ratio of W was 0.2 mol%, and a molar ratio of Ti was 0.2 mol%. In addition, an identification of compounds present in the positive electrode active material by a synchrotron radiation X-ray diffraction measurement confirmed the presence of CaWO₄ and SrTiO₃ as AₓB_{y}O_{z} compounds.
(3) In the fabrication of the positive electrode, the positive electrode was cut to a predetermined electrode size that is accommodated in an outer housing body with an outer diameter of 45 mm, and in the fabrication of a test cell, the electrode assembly was accommodated in the outer housing body with an outer diameter of 45 mm.
(4) In the fabrication of the positive electrode, the positive electrode slurry was coated so as to attain a basis weight of 275 g/m².
(5) In the fabrication of the positive electrode, the conductive material was changed from 0.1 mass% of carbon nanotubes (CNT) to 1.5 mass% of acetylene black (AB).
(6) In the fabrication of the test cell, the positive electrode and the sealing assembly were connected via the positive electrode current-collecting member as shown in FIG. 4.

### <Comparative Example 5>

A test cell was fabricated and assessed in a similar manner to Example 2 with the exception of not adding Ca(OH)₂, Sr(OH)₂, WO₃, and TiO₂ during the fabrication of the positive electrode active material.

### <Comparative Example 6>

A test cell was fabricated and assessed in a similar manner to Example 2 with the exception of changing the number of aluminum leads to one during the fabrication of the test cell.

### <Comparative Example 7>

A test cell was fabricated and assessed in a similar manner to Example 2 with the exception of coating the positive electrode slurry to attain a basis weight of 190 g/m² during the fabrication of the positive electrode.

### <Comparative Example 8>

A test cell was fabricated and assessed in a similar manner to Example 2 with the exception of obtaining the positive electrode by cutting the positive electrode into a predetermined electrode size that is accommodated in an outer housing body with an outer diameter of 21 mm during the fabrication of the positive electrode and accommodating the electrode assembly in the outer housing body with an outer diameter of 21 mm during the fabrication of the test cell.

Table 2 shows the volumetric energy density, the internal resistance, and the capacity retention rate for each of the test cells in Example 2 and Comparative Examples 5 to 8. Table 2 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 2 are expressed relative to values of Comparative Example 5 being 100.

**[Table 2]**

| | Positive electrode active material constituent elements [mol%] | | | | AₓB_{y}O_{z} compou nd | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 2 | 75.0 | 10.0 | 15.0 | Ca0.2, Sr0.2, WO.2,Ti0.2 | CaWO₄ | 45 | 275 | - | 1.5 | - | Current-collecting member | - | 100 | 87 | 205 |
| | | | | | SrTiO₃ | | | | | | | | | | |
| Comparative Example 5 | 75.0 | 10.0 | 15.0 | - | - | 45 | 275 | - | 1.5 | - | Current-collecting member | - | 100 | 100 | 100 |
| Comparative Example 6 | 75.0 | 10.0 | 15.0 | Ca0.2, Sr0.2, WO.2,Ti0.2 | CaWO₄ | 45 | 275 | - | 1.5 | - | - | 1 | 108 | 163 | 205 |
| | | | | | SrTiO₃ | | | | | | | | | | |
| Comparative Example 7 | 75.0 | 10.0 | 15.0 | Ca0.2, Sr0.2, WO.2,Ti0.2 | CaWO₄ | 45 | 15.0 | - | 1.5 | - | Current-collecting member | - | 77 | 83 | 241 |
| | | | | | SrTiO₃ | | | | | | | | | | |
| Comparative Example 8 | 75.0 | 10.0 | 15.0 | Ca0.2, Sr0.2, WO.2,Ti0.2 | CaWO₄ | 21 | 275 | - | 1.5 | - | Current-collecting member | - | 91 | 80 | 212 |
| | | | | | SrTiO₃ | | | | | | | | | | |

### <Example 3>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.80}CO_{0.05}Mn_{0.15}O₂.
(2) In the mixing step in the fabrication of the positive electrode active material, Sr(OH)₂ and TiO₂ were added so that, with respect to a total amount of Ni, Co, and Mn, a molar ratio of Sr was 0.2 mol% and a molar ratio of Ti was 0.2 mol%. In addition, an identification of compounds present in the positive electrode active material by a synchrotron radiation X-ray diffraction measurement confirmed the presence of SrTiO₃ as an AₓB_{y}O_{z} compound.
(3) In the fabrication of the positive electrode, the positive electrode was cut to a predetermined electrode size that is accommodated in an outer housing body with an outer diameter of 40 mm, and in the fabrication of a test cell, the electrode assembly was accommodated in the outer housing body with an outer diameter of 40 mm.
(4) In the fabrication of the positive electrode, the positive electrode slurry was coated so as to attain a basis weight of 300 g/m².
(5) In the fabrication of the test cell, as shown in FIG. 3, the three aluminum leads were arranged so that central angles formed by radial lines passing through a circumferential center of the aluminum leads are approximately equal.

### <Comparative Example 9>

A test cell was fabricated and assessed in a similar manner to Example 3 with the exception of not adding Sr(OH)₂ and TiO₂ during the fabrication of the positive electrode active material.

### <Comparative Example 10>

A test cell was fabricated and assessed in a similar manner to Example 3 with the exception of changing the number of aluminum leads to one during the fabrication of the test cell.

### <Comparative Example 11>

A test cell was fabricated and assessed in a similar manner to Example 3 with the exception of coating the positive electrode slurry to attain a basis weight of 200 g/m² during the fabrication of the positive electrode.

### <Comparative Example 12>

A test cell was fabricated and assessed in a similar manner to Example 3 with the exception of obtaining the positive electrode by cutting the positive electrode into a predetermined electrode size that is accommodated in an outer housing body with an outer diameter of 21 mm during the fabrication of the positive electrode and accommodating the electrode assembly in the outer housing body with an outer diameter of 21 mm during the fabrication of the test cell.

Table 3 shows the volumetric energy density, the internal resistance, and the capacity retention rate for each of the test cells in Example 3 and Comparative Examples 9 to 12. Table 3 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 3 are expressed relative to values of Comparative Example 9 being 100.

**[Table 3]**

| | Positive electrode active material constituent elements [mol%] | | | | AₓB_{y}O_{z} compou nd | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetri c energy density | Internal resistance | Capacity retention rate |
| Example 3 | 80.0 | 5.0 | 15.0 | Sr0.2,Ti0.2 | SrTiO₃ | 40 | 300 | 0.1 | - | - | Central angles are approximately equal | 3 | 100 | 89 | 133 |
| Comparative Example 9 | 80.0 | 5.0 | 15.0 | - | - | 40 | 300 | 0.1 | - | - | Central angles are approximately equal | 3 | 100 | 100 | 100 |
| Comparative Example 10 | 80.0 | 5.0 | 15.0 | Sr0.2,Ti0.2 | SrTiO₃ | 40 | 300 | 0.1 | - | - | - | 1 | 108 | 156 | 133 |
| Comparative Example 11 | 80.0 | 5.0 | 15.0 | Sr0.2,Ti0.2 | SrTiO₃ | 40 | 200 | 0.1 | - | - | Central angles are approximately equal | 3 | 75 | 78 | 160 |
| Comparative Example 12 | 80.0 | 5.0 | 15.0 | Sr0.2,Ti0.2 | SrTiO₃ | 21 | 300 | 0.1 | - | - | Central angles are approximately equal | 3 | 98 | 73 | 137 |

### <Example 4>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.80}Co_{0.10}Mn_{0.10}O₂.
(2) In the mixing step in the fabrication of the positive electrode active material, Ca(OH)₂ and MoO₃ were added to the metal oxide described above so that, with respect to a total amount of Ni, Co, and Mn, a molar ratio of Ca was 0.2 mol% and a molar ratio of Mo was 0.2 mol%. In addition, an identification of compounds present in the positive electrode active material by a synchrotron radiation X-ray diffraction measurement confirmed the presence of CaMoO₄ as an AₓB_{y}O_{z} compound.
(3) In the fabrication of the positive electrode, the positive electrode slurry was coated so as to attain a basis weight of 325 g/m².
(4) In the fabrication of the test cell, as shown in FIG. 2, the three aluminum leads were connected to the positive electrode at approximately equal intervals with respect to the longitudinal direction of the positive electrode.

### <Comparative Example 13>

A test cell was fabricated and assessed in a similar manner to Example 4 with the exception of not adding Ca(OH)₂ and MoO₃ during the fabrication of the positive electrode active material.

### <Comparative Example 14>

A test cell was fabricated and assessed in a similar manner to Example 4 with the exception of changing the number of aluminum leads to one during the fabrication of the test cell.

### <Comparative Example 15>

A test cell was fabricated and assessed in a similar manner to Example 5 with the exception of coating the positive electrode slurry to attain a basis weight of 200 g/m² during the fabrication of the positive electrode.

### <Comparative Example 16>

A test cell was fabricated and assessed in a similar manner to Example 4 with the exception of obtaining the positive electrode by cutting the positive electrode into a predetermined electrode size that is accommodated in an outer housing body with an outer diameter of 21 mm during the fabrication of the positive electrode and accommodating the electrode assembly in the outer housing body with an outer diameter of 21 mm during the fabrication of the test cell.

Table 4 shows the volumetric energy density, the internal resistance, and the capacity retention rate for each of the test cells in Example 4 and Comparative Examples 13 to 16. Table 4 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 4 are expressed relative to values of Comparative Example 13 being 100.

**[Table 4]**

| | Positive electrode active material constituent elements [mol%] | | | | AₓB_{y}O_{z} compound | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 4 | 80.0 | 10.0 | 10.0 | Ca0.2,Mo0.2 | CaMoO₄ | 50 | 325 | 0.1 | - | - | Approximately equal intervals | 3 | 100 | 84 | 143 |
| Comparative Example 13 | 80.0 | 10.0 | 10.0 | - | - | 50 | 325 | 0.1 | - | - | Approximately equal intervals | 3 | 100 | 100 | 100 |
| Comparative Example 14 | 80.0 | 10.0 | 10.0 | Ca0.2,Mo0.2 | CaMoO₄ | 50 | 325 | 0.1 | - | - | - | 1 | 106 | 157 | 143 |
| Comparative Example 15 | 80.0 | 10.0 | 10.0 | Ca0.2,Mo0.2 | CaMoO₄ | 50 | 200 | 0.1 | - | - | Approximately equal intervals | 3 | 68 | 70 | 179 |
| Comparative Example 16 | 80.0 | 10.0 | 10.0 | Ca0.2,Mo0.2 | CaMoO₄ | 21 | 325 | 0.1 | - | - | Approximately equal intervals | 3 | 76 | 63 | 149 |

### <Example 5>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.85}CO_{0.05}Mn_{0.10}O₂.
(2) In the mixing step in the fabrication of the positive electrode active material, Ca(OH)₂ and TiO₂ were added to the metal oxide described above so that, with respect to a total amount of Ni, Co, and Mn, a molar ratio of Ca was 0.2 mol% and a molar ratio of Ti was 0.2 mol%. In addition, an identification of compounds present in the positive electrode active material by a synchrotron radiation X-ray diffraction measurement confirmed the presence of CaTiO₄ as an AₓB_{y}O_{z} compound.
(3) In the fabrication of the positive electrode, the positive electrode was cut to a predetermined electrode size that is accommodated in an outer housing body with an outer diameter of 45 mm, and in the fabrication of a test cell, the electrode assembly was accommodated in the outer housing body with an outer diameter of 45 mm.
(4) In the fabrication of the positive electrode, the positive electrode slurry was coated so as to attain a basis weight of 350 g/m².
(5) In the fabrication of the test cell, the positive electrode and the sealing assembly were connected via the positive electrode current-collecting member as shown in FIG. 4.

### <Comparative Example 17>

A test cell was fabricated and assessed in a similar manner to Example 5 with the exception of not adding Ca(OH)₂ and TiO₂ during the fabrication of the positive electrode active material.

### <Comparative Example 18>

A test cell was fabricated and assessed in a similar manner to Example 5 with the exception of changing the number of aluminum leads to one during the fabrication of the test cell.

### <Comparative Example 19>

A test cell was fabricated and assessed in a similar manner to Example 5 with the exception of coating the positive electrode slurry to attain a basis weight of 225 g/m² during the fabrication of the positive electrode.

### <Comparative Example 20>

A test cell was fabricated and assessed in a similar manner to Example 5 with the exception of obtaining the positive electrode by cutting the positive electrode into a predetermined electrode size that is accommodated in an outer housing body with an outer diameter of 21 mm during the fabrication of the positive electrode and accommodating the electrode assembly in the outer housing body with an outer diameter of 21 mm during the fabrication of the test cell.

Table 5 shows the volumetric energy density, the internal resistance, and the capacity retention rate for each of the test cells in Example 5 and Comparative Examples 17 to 20. Table 5 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 5 are expressed relative to values of Comparative Example 17 being 100.

**[Table 5]**

| | Positive electrode active material constituent elements [mol%] | | | | AₓB_{y}O_{z} compound | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 5 | 85.0 | 5.0 | 10.0 | Ca0.2,Ti0.2 | CaTiO₃ | 45 | 350 | 0.1 | - | - | Current-collecting member | - | 100 | 92 | 137 |
| Comparative Example 17 | 85.0 | 5.0 | 10.0 | - | - | 45 | 350 | 0.1 | - | - | Current-collecting member | - | 100 | 100 | 100 |
| Comparative Example 18 | 85.0 | 5.0 | 10.0 | Ca0.2,Ti0.2 | CaTiO₃ | 45 | 350 | 0.1 | - | - | - | 1 | 106 | 228 | 137 |
| Comparative Example 19 | 85.0 | 5.0 | 10.0 | Ca0.2,Ti0.2 | CaTiO₃ | 45 | 225 | 0.1 | - | - | Current-collecting member | - | 71 | 84 | 170 |
| Comparative Example 20 | 85.0 | 5.0 | 10.0 | Ca0.2,Ti0.2 | CaTiO₃ | 21 | 350 | 0.1 | - | - | Current-collecting member | - | 82 | 80 | 142 |

### <Example 6>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.90}Co_{0.05}Mn_{0.05}O₂.
(2) In the mixing step in the fabrication of the positive electrode active material, Ca(OH)₂ and ZrO₂ were added to the metal oxide described above so that, with respect to a total amount of Ni, Co, and Mn, a molar ratio of Ca was 0.2 mol% and a molar ratio of Zr was 0.2 mol%. In addition, an identification of compounds present in the positive electrode active material by a synchrotron radiation X-ray diffraction measurement confirmed the presence of CaZrO₃ as an AₓB_{y}O_{z} compound.
(3) In the fabrication of the positive electrode, the positive electrode was cut to a predetermined electrode size that is accommodated in an outer housing body with an outer diameter of 40 mm, and in the fabrication of a test cell, the electrode assembly was accommodated in the outer housing body with an outer diameter of 40 mm.
(4) In the fabrication of the positive electrode, the conductive material was changed from 0.1 mass% of carbon nanotubes (CNT) to 1.5 mass% of acetylene black (AB). Furthermore, 5 mass% of Li₂NiO₂ was added.
(5) In the fabrication of the test cell, as shown in FIG. 2, four aluminum leads were connected to the positive electrode at approximately equal intervals with respect to the longitudinal direction of the positive electrode.

### <Comparative Example 21>

A test cell was fabricated and assessed in a similar manner to Example 6 with the exception of not adding Ca(OH)₂ and ZrO₂ during the fabrication of the positive electrode active material.

### <Comparative Example 22>

A test cell was fabricated and assessed in a similar manner to Example 6 with the exception of changing the number of aluminum leads to one during the fabrication of the test cell.

### <Comparative Example 23>

A test cell was fabricated and assessed in a similar manner to Example 6 with the exception of coating the positive electrode slurry to attain a basis weight of 225 g/m² during the fabrication of the positive electrode.

### <Comparative Example 24>

A test cell was fabricated and assessed in a similar manner to Example 6 with the exception of obtaining the positive electrode by cutting the positive electrode into a predetermined electrode size that is accommodated in an outer housing body with an outer diameter of 18 mm during the fabrication of the positive electrode and accommodating the electrode assembly in the outer housing body with an outer diameter of 18 mm during the fabrication of the test cell.

Table 6 shows the volumetric energy density, the internal resistance, and the capacity retention rate for each of the test cells in Example 6 and Comparative Examples 21 to 24. Table 6 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 6 are expressed relative to values of Comparative Example 21 being 100.

**[Table 6]**

| | Positive electrode active material constituent elements [mol%] | | | | AₓB_{y}O_{z} compound | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 6 | 90.0 | 5.0 | 5.0 | Ca0.2,Zr0.2 | CaZrO₃ | 40 | 250 | - | 1.5 | 5 | Approximately equal intervals | 4 | 100 | 90 | 145 |
| Comparative Example 21 | 90.0 | 5.0 | 5.0 | - | - | 40 | 250 | - | 1.5 | 5 | Approximately equal intervals | 4 | 100 | 100 | 100 |
| Comparative Example 22 | 90.0 | 5.0 | 5.0 | Ca0.2,Zr0.2 | CaZrO₃ | 40 | 250 | - | 1.5 | 5 | - | 1 | 110 | 159 | 145 |
| Comparative Example 23 | 90.0 | 5.0 | 5.0 | Ca0.2,Zr0.2 | CaZrO₃ | 40 | 225 | - | 1.5 | 5 | Approximately equal intervals | 4 | 100 | 87 | 152 |
| Comparative Example 24 | 90.0 | 5.0 | 5.0 | Ca0.2,Zr0.2 | CaZrO₃ | 18 | 250 | - | 1.5 | 5 | Approximately equal intervals | 4 | 100 | 77 | 149 |

### <Example 7>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.90}Co_{0.025}Mn_{0.075}O₂.
(2) In the mixing step in the fabrication of the positive electrode active material, Sr(OH)₂ and ZrO₂ were added to the metal oxide described above so that, with respect to a total amount of Ni, Co, and Mn, a molar ratio of Sr was 0.2 mol% and a molar ratio of Zr was 0.2 mol%. In addition, an identification of compounds present in the positive electrode active material by a synchrotron radiation X-ray diffraction measurement confirmed the presence of SrZrO₃ as an AₓB_{y}O_{z} compound.
(3) In the fabrication of the positive electrode, the positive electrode was cut to a predetermined electrode size that is accommodated in an outer housing body with an outer diameter of 35 mm, and in the fabrication of a test cell, the electrode assembly was accommodated in the outer housing body with an outer diameter of 35 mm.
(4) In the fabrication of the positive electrode, the positive electrode slurry was coated so as to attain a basis weight of 300 g/m².
(5) In the fabrication of the positive electrode, 5 mass% of Li₂NiO₂ was added in addition to .1 mass% of carbon nanotubes (CNT) as the conductive material.
(6) In the fabrication of the test cell, the positive electrode and the sealing assembly were connected via the positive electrode current-collecting member as shown in FIG. 4.

### <Example 8>

A test cell was fabricated and assessed in a similar manner to Example 7 with the exception of adding Ca(OH)₂ and ZrO₂ to the metal oxide described above in the mixing step in the fabrication of the positive electrode active material so that, with respect to a total amount of Ni, Co, and Mn, a molar ratio of Ca was 0.2 mol% and a molar ratio of Zr was 0.2 mol%. In addition, an identification of compounds present in the positive electrode active material by a synchrotron radiation X-ray diffraction measurement confirmed the presence of CaZrO₃ as an AₓB_{y}O_{z} compound.

### <Comparative Example 25>

A test cell was fabricated and assessed in a similar manner to Example 7 with the exception of not adding Sr(OH)₂ and ZrO₂ during the fabrication of the positive electrode active material.

### <Comparative Example 26>

A test cell was fabricated and assessed in a similar manner to Example 7 with the exception of changing the number of aluminum leads to one during the fabrication of the test cell.

### <Comparative Example 27>

A test cell was fabricated and assessed in a similar manner to Example 7 with the exception of coating the positive electrode slurry to attain a basis weight of 225 g/m² during the fabrication of the positive electrode.

### <Comparative Example 28>

A test cell was fabricated and assessed in a similar manner to Example 7 with the exception of obtaining the positive electrode by cutting the positive electrode into a predetermined electrode size that is accommodated in an outer housing body with an outer diameter of 21 mm during the fabrication of the positive electrode and accommodating the electrode assembly in the outer housing body with an outer diameter of 21 mm during the fabrication of the test cell.

### <Comparative Example 29>

A test cell was fabricated and assessed in a similar manner to Example 8 with the exception of changing the number of aluminum leads to one during the fabrication of the test cell.

### <Comparative Example 30>

A test cell was fabricated and assessed in a similar manner to Example 8 with the exception of coating the positive electrode slurry to attain a basis weight of 225 g/m² during the fabrication of the positive electrode.

### <Comparative Example 31>

A test cell was fabricated and assessed in a similar manner to Example 8 with the exception of obtaining the positive electrode by cutting the positive electrode into a predetermined electrode size that is accommodated in an outer housing body with an outer diameter of 21 mm during the fabrication of the positive electrode and accommodating the electrode assembly in the outer housing body with an outer diameter of 21 mm during the fabrication of the test cell.

Table 7 shows the volumetric energy density, the internal resistance, and the capacity retention rate for each of the test cells in Examples 7 and 8 and Comparative Examples 25 to 31. Table 7 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 7 are expressed relative to values of Comparative Example 25 being 100.

**[Table 7]**

| | Positive electrode active material constituent elements [mol%] | | | | AₓB_{y}O_{z} compou nd | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 7 | 90.0 | 2.5 | 7.5 | Sr0.2,Zr0.2 | SrZrO₃ | 35 | 300 | 0.1 | - | 5 | Current-collecting member | - | 100 | 92 | 149 |
| Example 8 | 90.0 | 2.5 | 7.5 | Ca0.2,Zr0.2 | CaZrO₃ | 35 | 300 | 0.1 | - | 5 | Current-collecting member | - | 100 | 88 | 200 |
| Comparative Example 25 | 90.0 | 2.5 | 7.5 | - | - | 35 | 300 | 0.1 | - | 5 | Current-collecting member | - | 100 | 100 | 100 |
| Comparative Example 26 | 90.0 | 2.5 | 7.5 | Sr0.2,Zr0.2 | SrZrO₃ | 35 | 300 | 0.1 | - | 5 | - | 1 | 110 | 185 | 149 |
| Comparative Example 27 | 90.0 | 2.5 | 7.5 | Sr0.2,Zr0.2 | SrZrO₃ | 35 | 225 | 0.1 | - | 5 | Current-collecting member | - | 85 | 89 | 171 |
| Comparative Example 28 | 90.0 | 2.5 | 7.5 | Sr0.2,Zr0.2 | SrZrO₃ | 21 | 300 | 0.1 | - | 5 | Current-collecting member | - | 112 | 86 | 152 |
| Comparative Example 29 | 90.0 | 2.5 | 7.5 | Ca0.2,Zr0.2 | CaZrO₃ | 35 | 300 | 0.1 | - | 5 | - | 1 | 110 | 158 | 200 |
| Comparative Example 30 | 90.0 | 2.5 | 7.5 | Ca0.2,Zr0.2 | CaZrO₃ | 35 | 225 | 0.1 | - | 5 | Current-collecting member | - | 85 | 86 | 229 |
| Comparative Example 31 | 90.0 | 2.5 | 7.5 | Ca0.2,Zr0.2 | CaZrO₃ | 21 | 300 | 0.1 | - | 5 | Current-collecting member | - | 112 | 84 | 204 |

### <Example 9>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.90}Co_{0.035}Mn_{0.065}O₂.
(2) In the mixing step in the fabrication of the positive electrode active material, Ca(OH)₂, Sr(OH)₂, TiO₂, and ZrO₂ were added so that, with respect to a total amount of Ni, Co, and Mn, a molar ratio of Ca was 0.2 mol%, a molar ratio of Sr was 0.2 mol%, a molar ratio of Ti was 0.2 mol%, and a molar ratio of Zr was 0.2 mol%. In addition, an identification of compounds present in the positive electrode active material by a synchrotron radiation X-ray diffraction measurement confirmed the presence of CaZrO₃ and SrTiO₃ as AₓB_{y}O_{z} compounds.
(3) In the fabrication of the positive electrode, the positive electrode slurry was coated so as to attain a basis weight of 325 g/m².
(4) In the fabrication of the test cell, the positive electrode and the sealing assembly were connected via the positive electrode current-collecting member as shown in FIG. 4.

### <Comparative Example 32>

A test cell was fabricated and assessed in a similar manner to Example 9 with the exception of not adding Ca(OH)₂, Sr(OH)₂, TiO₂, and ZrO₂ during the fabrication of the positive electrode active material.

### <Comparative Example 33>

A test cell was fabricated and assessed in a similar manner to Example 9 with the exception of changing the number of aluminum leads to one during the fabrication of the test cell.

### <Comparative Example 34>

A test cell was fabricated and assessed in a similar manner to Example 9 with the exception of coating the positive electrode slurry to attain a basis weight of 225 g/m² during the fabrication of the positive electrode.

### <Comparative Example 35>

A test cell was fabricated and assessed in a similar manner to Example 9 with the exception of obtaining the positive electrode by cutting the positive electrode into a predetermined electrode size that is accommodated in an outer housing body with an outer diameter of 18 mm during the fabrication of the positive electrode and accommodating the electrode assembly in the outer housing body with an outer diameter of 18 mm during the fabrication of the test cell.

Table 8 shows the volumetric energy density, the internal resistance, and the capacity retention rate for each of the test cells in Example 9 and Comparative Examples 32 to 35. Table 8 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 8 are expressed relative to values of Comparative Example 32 being 100.

**[Table 8]**

| | Positive electrode active material constituent elements [mol%] | | | | AₓB_{y}O_{z} compou nd | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 9 | 90.0 | 3.5 | 6.5 | Ca0.2,Sr0.3, Ti0.2,Zr0.2 | CaZrO₃ | 50 | 325 | 0.1 | - | - | Current-collecting member | - | 100 | 84 | 205 |
| | | | | | SrTiO₃ | | | | | | | | | | |
| Comparative Example 32 | 90.0 | 3.5 | 6.5 | - | - | 50 | 325 | 0.1 | - | - | Current-collecting member | - | 100 | 100 | 100 |
| Comparative Example 33 | 90.0 | 3.5 | 6.5 | Ca0.2,Sr0.3, Ti0.2,Zr0.2 | CaZrO₃ | 50 | 325 | 0.1 | - | - | - | 1 | 106 | 176 | 205 |
| | | | | | SrTiO₃ | | | | | | | | | | |
| Comparative Example 34 | 90.0 | 3.5 | 6.5 | Ca0.2,Sr0.3, Ti0.2,Zr0.2 | CaZrO₃ | 50 | 225 | 0.1 | - | - | Current-collecting member | - | 75 | 79 | 244 |
| | | | | | SrTiO₃ | | | | | | | | | | |
| Comparative Example 35 | 90.0 | 3.5 | 6.5 | Ca0.2, Sr0.2, Ti0.2,Zr0.2 | CaZrO₃ | 18 | 325 | 0.1 | - | - | Current-collecting member | - | 70 | 74 | 214 |
| | | | | | SrTiO₃ | | | | | | | | | | |

### <Example 10>

A trial cell was fabricated in a similar manner to Example 1 with the exception of making the following changes.
(1) In the mixing step in the fabrication of the positive electrode active material, the composition of the lithium-containing composite oxide was adjusted to LiNi_{0.925}Mn_{0.075}O₂.
(2) In the mixing step in the fabrication of the positive electrode active material, Sr(OH)₂ and ZrO₂ were added so that, with respect to a total amount of Ni and Mn, a molar ratio of Sr was 0.2 mol% and a molar ratio of Zr was 0.2 mol%. In addition, an identification of compounds present in the positive electrode active material by a synchrotron radiation X-ray diffraction measurement confirmed the presence of SrZrO₃ as an AₓB_{y}O_{z} compound.
(3) In the fabrication of the positive electrode, the positive electrode was cut to a predetermined electrode size that is accommodated in an outer housing body with an outer diameter of 45 mm, and in the fabrication of a test cell, the electrode assembly was accommodated in the outer housing body with an outer diameter of 45 mm.
(4) In the fabrication of the positive electrode, the positive electrode slurry was coated so as to attain a basis weight of 350 g/m².
(5) In the fabrication of the test cell, the positive electrode and the sealing assembly were connected via the positive electrode current-collecting member as shown in FIG. 4.

### <Comparative Example 36>

A test cell was fabricated and assessed in a similar manner to Example 10 with the exception of not adding Sr(OH)₂ and ZrO₂ during the fabrication of the positive electrode active material.

### <Comparative Example 37>

A test cell was fabricated and assessed in a similar manner to Example 10 with the exception of changing the number of aluminum leads to one during the fabrication of the test cell.

### <Comparative Example 38>

A test cell was fabricated and assessed in a similar manner to Example 10 with the exception of coating the positive electrode slurry to attain a basis weight of 225 g/m² during the fabrication of the positive electrode.

### <Comparative Example 39>

A test cell was fabricated and assessed in a similar manner to Example 10 with the exception of obtaining the positive electrode by cutting the positive electrode into a predetermined electrode size that is accommodated in an outer housing body with an outer diameter of 18 mm during the fabrication of the positive electrode and accommodating the electrode assembly in the outer housing body with an outer diameter of 18 mm during the fabrication of the test cell.

Table 9 shows the volumetric energy density, the internal resistance, and the capacity retention rate for each of the test cells in Example 10 and Comparative Examples 36 to 39. Table 9 also shows, for each lithium-containing composite oxide, a composition (a ratio of each metal element to a total number of moles of metal elements excluding Li), types and amounts of elements added, identified AₓB_{y}O_{z} compounds, an outer diameter of the battery, a basis weight of the positive electrode mixture layer, a current collection mode of the positive electrode, and the number of aluminum leads. Note that the volumetric energy density, the internal resistance, and the capacity retention rate shown in Table 9 are expressed relative to values of Comparative Example 36 being 100.

**[Table 9]**

| | Positive electrode active material constituent elements [mol%] | | | | AₓB_{y}O_{z} compou nd | Battery outer diameter [mm] | Basis weight [g/m²] | Added amount in positive electrode mixture layer [mass%] | | | Current collection at positive electrode | | Assessment result (relative values) | | |
|---|---|---|---|---|---|---|---|---|---|---|---|---|---|---|---|
| | Ni | Co | Mn | Surface-modified layer | | | | CNT | AB | Li₂NiO₂ | Mode | Number of leads | Volumetric energy density | Internal resistance | Capacity retention rate |
| Example 10 | 92.5 | 0.0 | 7.5 | Sr0.2,Zr0.2 | SrZrO₃ | 45 | 350 | 0.1 | - | - | Current-collecting member | - | 100 | 90 | 149 |
| Comparative Example 36 | 92.5 | 0.0 | 7.5 | - | - | 45 | 350 | 0.1 | - | - | Current-collecting member | - | 100 | 100 | 100 |
| Comparative Example 37 | 92.5 | 0.0 | 7.5 | Sr0.2,Zr0.2 | SrZrO₃ | 45 | 350 | 0.1 | - | - | - | 1 | 106 | 215 | 149 |
| Comparative Example 38 | 92.5 | 0.0 | 7.5 | Sr0.2,Zr0.2 | SrZrO₃ | 45 | 225 | 0.1 | - | - | Current-collecting member | - | 71 | 82 | 185 |
| Comparative Example 39 | 92.5 | 0.0 | 7.5 | Sr0.2,Zr0.2 | SrZrO₃ | 18 | 350 | 0.1 | - | - | Current-collecting member | - | 75 | 77 | 155 |

In all of Tables 1 through 9, the Examples have both low internal resistance and high capacity retention rates while maintaining a high volumetric energy density as compared to the Comparative Examples. In other words, by setting the basis weight of the positive electrode mixture layer containing the positive electrode active material to greater than or equal to 250 g/m², connecting the positive electrode and the sealing assembly to each other in a predetermined mode, and using a positive electrode active material with a surface-modified layer present, high energy density is realized and, at the same time, improved output characteristics and cycle characteristics are realized.

The present disclosure is further illustrated by the following embodiments.

Configuration 1: A non-aqueous electrolyte secondary battery, comprising: an electrode assembly in which a positive electrode and a negative electrode are stacked via a separator; and an outer housing body that accommodates the electrode assembly, the non-aqueous electrolyte secondary battery having a volumetric energy density greater than or equal to 600 Wh/L, wherein the positive electrode includes a positive electrode core and a positive electrode mixture layer which is formed on a surface of the positive electrode core and which contains a positive electrode active material, the positive electrode active material includes a lithium-containing composite oxide having a layered rock salt structure and a surface-modified layer present on surfaces of particles of the composite oxide, the surface-modified layer includes at least one element of Ca and Sr and at least one element selected from the group consisting of W, Mo, Ti, Si, Nb, and Zr, a basis weight of the positive electrode mixture layer is greater than or equal to 250 g/m², and three or more positive electrode leads are connected to the positive electrode.

Configuration 2: The non-aqueous electrolyte secondary battery according to Configuration 1, wherein the outer housing body has a bottomed cylindrical shape with an outer diameter greater than or equal to 25 mm.

Configuration 3: The non-aqueous electrolyte secondary battery according to Configuration 1 or 2, wherein the three or more positive electrode leads are arranged at approximately equal intervals in a longitudinal direction of the positive electrode.

Configuration 4: The non-aqueous electrolyte secondary battery according to any one of Configurations 1 to 3, wherein the three or more positive electrode leads are arranged so that central angles formed by radial lines passing through a circumferential center of the positive electrode leads are approximately equal.

Configuration 5: The non-aqueous electrolyte secondary battery according to any one of Configurations 1 to 4, wherein an exposed portion where the positive electrode core is exposed in a part of a width direction is provided in plurality in a longitudinal direction of the positive electrode, the positive electrode mixture layer is present across the width direction between the exposed portions, and one of the positive electrode leads is connected to each of the exposed portions.

Configuration 6: A non-aqueous electrolyte secondary battery, comprising: an electrode assembly in which a positive electrode and a negative electrode are stacked via a separator; and an outer housing body that accommodates the electrode assembly, the non-aqueous electrolyte secondary battery having a volumetric energy density greater than or equal to 600 Wh/L, wherein the positive electrode includes a positive electrode core and a positive electrode mixture layer which is formed on a surface of the positive electrode core and which contains a positive electrode active material, the positive electrode active material includes a lithium-containing composite oxide having a layered rock salt structure and a surface-modified layer present on surfaces of particles of the composite oxide, the surface-modified layer includes at least one element of Ca and Sr and at least one element selected from the group consisting of W, Mo, Ti, Si, Nb, and Zr, a basis weight of the positive electrode mixture layer is greater than or equal to 250 g/m², an end portion of the positive electrode core is connected to a positive electrode current-collecting member, and a positive electrode lead is connected to the positive electrode current-collecting member.

Configuration 7: The non-aqueous electrolyte secondary battery according to Configuration 6, wherein the outer housing body has a bottomed cylindrical shape with an outer diameter greater than or equal to 25 mm.

Configuration 8: The non-aqueous electrolyte secondary battery according to any one of Configurations 1 to 7, wherein the surface-modified layer includes a compound represented by the general formula AₓB_{y}O_{z} wherein 1 ≤ x ≤ 2, 1 ≤ y ≤ 5, 4 ≤ z ≤ 9, A is at least one selected from Ca and Sr, and B is at least one selected from the group consisting of W, Mo, Ti, Si, Nb, and Zr.

Configuration 9: The non-aqueous electrolyte secondary battery according to any one of Configurations 1 to 8, wherein the positive electrode mixture layer includes carbon fibers, and a content of the carbon fibers is greater than or equal to 0.01 mass% and less than or equal to 1 mass% with respect to a mass of the positive electrode active material.

Configuration 10: The non-aqueous electrolyte secondary battery according to any one of Configurations 1 to 9, wherein the positive electrode mixture layer includes amorphous carbon, and a content of the amorphous carbon is greater than or equal to 1 mass% and less than or equal to 3 mass% with respect to a mass of the positive electrode active material.

Configuration 11: The non-aqueous electrolyte secondary battery according to Configuration 1 or 6, wherein a content of Ni in the lithium-containing composite oxide is greater than or equal to 70 mol% with respect to a total amount of metal elements excluding Li.

Configuration 12: The non-aqueous electrolyte secondary battery according to any one of Configurations 1 to 10, wherein the positive electrode mixture layer includes Li₂NiO₂.

Configuration 13: The non-aqueous electrolyte secondary battery according to Configuration 12, wherein a content of Li₂NiO₂ included in the positive electrode mixture layer is greater than or equal to 1 mass% and less than or equal to 10 mass% with respect to a total mass of the positive electrode active material.

Configuration 14: The non-aqueous electrolyte secondary battery according to any one of Configurations 1 to 13, wherein the positive electrode mixture layer includes a compound represented by the general formula LiₐNi₂₋ₐO₂ (0 < a ≤ 0.5).

Configuration 15: The non-aqueous electrolyte secondary battery according to Configuration 14, wherein a content of the compound represented by the general formula LiₐNi₂₋ₐO₂ (0 < a ≤ 0.5) included in the positive electrode mixture layer is greater than or equal to 0.1 mass% and less than or equal to 5 mass% with respect to a total mass of the positive electrode active material.

### REFERENCE SIGNS LIST

10 Non-aqueous electrolyte secondary battery, 11 Positive electrode, 12 Negative electrode, 13 Separator, 14 Electrode assembly, 15 Outer housing body, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 27 Gasket, 30 Positive electrode core, 32 Positive electrode mixture layer, 34, 44 Exposed portion, 40 Negative electrode core, 42 Negative electrode mixture layer, 50 Positive electrode current-collecting member

## Claims

1. A non-aqueous electrolyte secondary battery, comprising:
an electrode assembly in which a positive electrode and a negative electrode are stacked via a separator; and
an outer housing body that accommodates the electrode assembly,
the non-aqueous electrolyte secondary battery having a volumetric energy density greater than or equal to 600 Wh/L, wherein
the positive electrode includes a positive electrode core and a positive electrode mixture layer which is formed on a surface of the positive electrode core and which contains a positive electrode active material,
the positive electrode active material includes a lithium-containing composite oxide having a layered rock salt structure and a surface-modified layer present on surfaces of particles of the composite oxide,
the surface-modified layer includes at least one element of Ca and Sr and at least one element selected from the group consisting of W, Mo, Ti, Si, Nb, and Zr,
a basis weight of the positive electrode mixture layer is greater than or equal to 250 g/m², and
three or more positive electrode leads are connected to the positive electrode.

2. The non-aqueous electrolyte secondary battery according to claim 1, wherein the outer housing body has a bottomed cylindrical shape with an outer diameter greater than or equal to 25 mm.

3. The non-aqueous electrolyte secondary battery according to claim 1 or 2, wherein the positive electrode leads are arranged at approximately equal intervals in a longitudinal direction of the positive electrode.

4. The non-aqueous electrolyte secondary battery according to claim 1 or 2, wherein the positive electrode leads are arranged so that central angles formed by radial lines passing through a circumferential center of the positive electrode leads are approximately equal.

5. The non-aqueous electrolyte secondary battery according to claim 1 or 2, wherein
an exposed portion where the positive electrode core is exposed in a part of a width direction is provided in plurality in a longitudinal direction of the positive electrode,
the positive electrode mixture layer is present across the width direction between the exposed portions, and
one of the positive electrode leads is connected to each of the exposed portions.

6. A non-aqueous electrolyte secondary battery, comprising:
an electrode assembly in which a positive electrode and a negative electrode are stacked via a separator; and
an outer housing body that accommodates the electrode assembly,
the non-aqueous electrolyte secondary battery having a volumetric energy density greater than or equal to 600 Wh/L, wherein
the positive electrode includes a positive electrode core and a positive electrode mixture layer which is formed on a surface of the positive electrode core and which contains a positive electrode active material,
the positive electrode active material includes a lithium-containing composite oxide having a layered rock salt structure and a surface-modified layer present on surfaces of particles of the composite oxide,
the surface-modified layer includes at least one element of Ca and Sr and at least one element selected from the group consisting of W, Mo, Ti, Si, Nb, and Zr,
a basis weight of the positive electrode mixture layer is greater than or equal to 250 g/m², and
an end portion of the positive electrode core is connected to a positive electrode current-collecting member and a positive electrode lead is connected to the positive electrode current-collecting member.

7. The non-aqueous electrolyte secondary battery according to claim 6, wherein the outer housing body has a bottomed cylindrical shape with an outer diameter greater than or equal to 25 mm.

8. The non-aqueous electrolyte secondary battery according to claim 1 or 6, wherein the surface-modified layer includes a compound represented by the general formula AₓB_{y}O_{z} wherein 1 ≤ x ≤ 2, 1 ≤ y ≤ 5, 4 ≤ z ≤ 9, A is at least one selected from Ca and Sr, and B is at least one selected from the group consisting of W, Mo, Ti, Si, Nb, and Zr.

9. The non-aqueous electrolyte secondary battery according to claim 1 or 6, wherein the positive electrode mixture layer includes carbon fibers, and a content of the carbon fibers is greater than or equal to 0.01 mass% and less than or equal to 1 mass% with respect to a mass of the positive electrode active material.

10. The non-aqueous electrolyte secondary battery according to claim 1 or 6, wherein the positive electrode mixture layer includes amorphous carbon, and a content of the amorphous carbon is greater than or equal to 1 mass% and less than or equal to 3 mass% with respect to a mass of the positive electrode active material.

11. The non-aqueous electrolyte secondary battery according to claim 1 or 6, wherein a content of Ni in the lithium-containing composite oxide is greater than or equal to 70 mol% with respect to a total amount of metal elements excluding Li.

12. The non-aqueous electrolyte secondary battery according to claim 1 or 6, wherein the positive electrode mixture layer includes Li₂NiO₂.

13. The non-aqueous electrolyte secondary battery according to claim 12, wherein a content of Li₂NiO₂ included in the positive electrode mixture layer is greater than or equal to 1 mass% and less than or equal to 10 mass% with respect to a total mass of the positive electrode active material.

14. The non-aqueous electrolyte secondary battery according to claim 1 or 6, wherein the positive electrode mixture layer includes a compound represented by the general formula LiₐNi₂₋ₐO₂ (0 < a ≤ 0.5).

15. The non-aqueous electrolyte secondary battery according to claim 14, wherein a content of the compound represented by the general formula LiₐNi₂₋ₐO₂ (0 < a ≤ 0.5) included in the positive electrode mixture layer is greater than or equal to 0.1 mass% and less than or equal to 5 mass% with respect to a total mass of the positive electrode active material.
